# EUROPEAN PATENT APPLICATION

(11) **EP 3 522 592 A1**
(43) Date of publication of application: **07.08.2019**
(21) Application number: 17855479.6
(22) Date of filing: 21.08.2017
(51) Int. Cl.: H04W 28/04, H04B 17/24, H04B 17/382, H04W 72/04, H04W 88/04, H04W 92/18

(54) **COMMUNICATION DEVICE AND COMMUNICATION METHOD**

(30) Priority: 29.09.2016 JP 2016191061
(71) Applicant: Sony Corporation, Tokyo 108-0075 (JP)
(72) Inventor: UCHIYAMA, Hiromasa, Tokyo 108-0075 (JP); SHIMEZAWA, Kazuyuki, Tokyo 108-0075 (JP); KUSASHIMA, Naoki, Tokyo 108-0075 (JP)
(74) Representative: D Young & Co LLP
(86) International application number: PCT/JP2017/029753
(87) International publication number: WO 2018/061521

(57) **Abstract**

[Object] In relay communication between a base station and a remote terminal via a relay terminal, quality of wireless link of end-to-end can be guaranteed.

[Solution] A communication device including: a communication unit configured to perform wireless communication; and a communication processing unit configured to acquire information regarding a remote terminal connected to a relay terminal configured to be movable via a first wireless link and allocate a resource for acquiring a reception result of data from the relay terminal via a second wireless link with the relay terminal to the second wireless link on the basis of the acquired information regarding the remote terminal.

## Description

### Technical Field

The present disclosure relates to a communication device and a communication method.

### Background Art

Technologies relating to the Internet-of-things (IoT) have gained attention in recent years, and research and development thereon has been actively conducted. Things need to be connected to networks in the IoT, and thus wireless communication has become an ever more important theme of technology. The current 3GPP has standardized communication methods specialized for IoT terminals, such as Machine Type Communication (MTC) and Narrowband IoT (NB-IoT). As characteristics of such communication methods for IoT terminals, realization of lower power consumption, low costs, and large coverage may be exemplified. In particular, communication with lower power consumption is very important for low-cost terminals such as IoT terminals, and further enhancement thereof is expected in the future.

As an example of representative low-cost terminals, so-called wearable terminals may be exemplified. Wearable terminals are required to have low power consumption and highly reliable communication, and also large capacity communication in accordance with situations. In order to cover such application cases, the 3GPP started the standardization of Further Enhancement D2D (FeD2D) in 2016. Since wearable terminals are present close to users, a communication distance can be shortened and communication with low power consumption and highly reliable communication can be realized by using relay communication using terminals such as smartphones. Note that an example of relay communication based on known standards is disclosed in, for example, Patent Literature 1.

### Citation List

### Patent Literature

Patent Literature 1: JP 2012-518958T

### Disclosure of Invention

### Technical Problem

Incidentally, in relay communication using terminal devices (so-called relay terminals) such as smartphones, existence of the relay terminals relaying communication between so-called remote terminals and base stations is important. On the other hand, in a case in which relay communication is realized on the basis of known standards, communication quality of each of wireless link communication between a base station and a relay terminal (hereinafter also referred to as "backhaul link communication") and wireless link communication between a relay terminal and a terminal device (so-called remote terminal) connected to the relay terminal (hereinafter also referred to as "access link communication") has been independently managed.

Accordingly, the present disclosure proposes a communication device and a communication method capable of guaranteeing quality of end-to-end wireless link in relay communication in which a relay terminal is interposed between a base station and a remote terminal.

### Solution to Problem

According to the present disclosure, there is provided a communication device including: a communication unit configured to perform wireless communication; and a communication processing unit configured to acquire information regarding a remote terminal connected to a relay terminal configured to be movable via a first wireless link and allocate a resource for acquiring a reception result of data from the relay terminal via a second wireless link with the relay terminal to the second wireless link on the basis of the acquired information regarding the remote terminal.

In addition, according to the present disclosure, there is provided a communication device including: a communication unit configured to perform wireless communication; and a notification unit configured to notify a base station connected via a second wireless link of information regarding a remote terminal connected via a first wireless link and notify the base station of a reception result of data using a resource allocated to the second wireless link after the notification.

In addition, according to the present disclosure, there is provided a communication device including: a communication unit configured to perform wireless communication; and a communication processing unit configured to acquire information regarding transmission and reception of data via a wireless link between a remote terminal and a relay terminal configured to be movable from at least one of the remote terminal or the relay terminal and control direct or indirect communication with the remote terminal corresponding to the information after the information regarding the transmission and reception of the data is acquired.

In addition, according to the present disclosure, there is provided a communication device including: a communication unit configured to perform wireless communication; and a notification unit configured to directly or indirectly notify a base station of information regarding transmission and reception of data via a wireless link between a remote terminal and a relay terminal configured to be movable.

In addition, according to the present disclosure, there is provided a communication method including, by a computer: performing wireless communication; and acquiring information regarding a remote terminal connected to a relay terminal configured to be movable via a first wireless link and allocating a resource for acquiring a reception result of data from the relay terminal via a second wireless link with the relay terminal to the second wireless link on the basis of the acquired information regarding the remote terminal.

In addition, according to the present disclosure, there is provided a communication method including, by a computer: performing wireless communication; and notifying a base station connected via a second wireless link of information regarding a remote terminal connected via a first wireless link and notifying the base station of a reception result of data using a resource allocated to the second wireless link after the notification.

In addition, according to the present disclosure, there is provided a communication method including, by a computer: performing wireless communication; and acquiring information regarding transmission and reception of data via a wireless link between a remote terminal and a relay terminal configured to be movable from at least one of the remote terminal or the relay terminal and controlling direct or indirect communication with the remote terminal corresponding to the information after the information regarding the transmission and reception of the data is acquired.

In addition, according to the present disclosure, there is provided a communication method including, by a computer: performing wireless communication; and directly or indirectly notifying a base station of information regarding transmission and reception of data via a wireless link between a remote terminal and a relay terminal configured to be movable.

### Advantageous Effects of Invention

As described above, the present disclosure provides a communication device and a communication method capable of guaranteeing quality of end-to-end wireless link in relay communication in which a relay terminal is interposed between a base station and a remote terminal.

Note that the effects described above are not necessarily limitative. With or in the place of the above effects, there may be achieved any one of the effects described in this specification or other effects that may be grasped from this specification.

### Brief Description of Drawings

FIG. 1 is an explanatory diagram for describing an example of a schematic configuration of a system according to an embodiment of the present disclosure.
FIG. 2 is an explanatory diagram for describing an overview of communication via a relay terminal.
FIG. 3 is an explanatory diagram for describing an example of a schematic configuration of relay communication.
FIG. 4 is an explanatory diagram for describing an overview of the relay communication in the system according to the embodiment.
FIG. 5 is a block diagram illustrating an example of a configuration of a base station according to the embodiment.
FIG. 6 is a block diagram illustrating an example of a configuration of a terminal device according to the embodiment.
FIG. 7 is an explanatory diagram for describing an overview of HARQ.
FIG. 8 is an explanatory diagram for describing an overview of a system according to a first embodiment of the present disclosure.
FIG. 9 is a sequence diagram illustrating an example of a flow of a series of processes of relay communication in the system according to the embodiment.
FIG. 10 is an explanatory diagram for describing an overview of a system according to a second embodiment of the present disclosure.
FIG. 11 is a flowchart illustrating an example of a flow of a series of processes of the system according to the embodiment.
FIG. 12 is a sequence diagram illustrating an example of a flow of a series of processes of relay communication in the system according to the embodiment.
FIG. 13 is a sequence diagram illustrating another example of the flow of the series of processes of the relay communication in the system according to the embodiment.
FIG. 14 is an explanatory diagram for describing an aspect of an operation of the system according to the embodiment.
FIG. 15 is an explanatory diagram for describing an overview of a system according to a third embodiment of the present disclosure.
FIG. 16 is an explanatory diagram for describing an overview of the system according to the embodiment.
FIG. 17 is a sequence diagram illustrating an example of a flow of a series of processes of the system according to the embodiment.
FIG. 18 is a sequence diagram illustrating another example of the flow of the series of processes of the system according to the embodiment.
FIG. 19 is a block diagram illustrating a first example of a schematic configuration of an eNB.
FIG. 20 is a block diagram illustrating a second example of the schematic configuration of the eNB.
FIG. 21 is a block diagram illustrating an example of a schematic configuration of a smartphone.
FIG. 22 is a block diagram illustrating an example of a schematic configuration of a car navigation apparatus.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be provided in the following order.
1. Introduction
1.1. Example of system configuration
1.2. Review of communication via relay terminal
2. Configuration example
2.1. Configuration example of base station
2.2. Configuration example of terminal device
3. First embodiment
3.1. Overview
3.2. Technical features
3.3. Evaluation
4. Second embodiment
4.1. Overview
4.2. Technical features
4.3. Evaluation
5. Third embodiment
5.1. Overview
5.2. Technical features
5.3. Evaluation
6. Application examples
6.1. Application examples for base station
6.2. Application examples for terminal device
7. Conclusion

### <<1. Introduction>>

### <1.1. Example of system configuration>

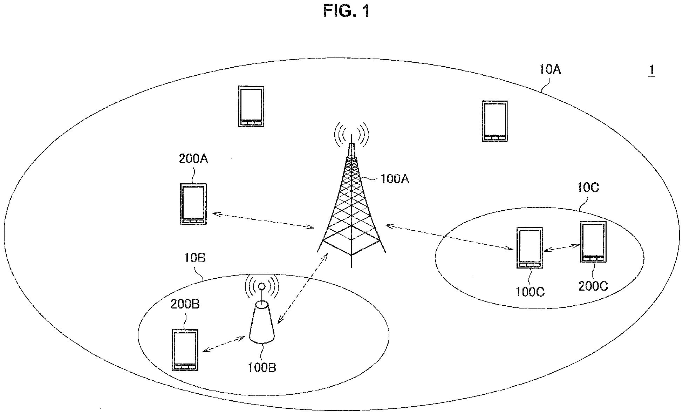

First, an example of a schematic configuration of a system 1 according to an embodiment of the present disclosure will be described with reference to FIG. 1. FIG. 1 is an explanatory diagram for describing an example of a schematic configuration of the system 1 according to an embodiment of the present disclosure. The system 1 includes wireless communication devices 100 and terminal devices 200 as illustrated in FIG. 1. The terminal devices 200 can also be called users here. The users can also be called UE. A wireless communication device 100C can also be called UE-Relays. The UE here may be UE defined in LTE or LTE-A, and the UE-Relays may be Prose UE to Network Relay discussed in the 3GPP or may mean communication apparatuses more generally.

### (1) Wireless communication device 100

The wireless communication devices 100 are devices that provide wireless communication services to devices under their control. For example, a wireless communication device 100A may be a base station of a cellular system (or a mobile communication system). The base station 100A performs wireless communication with a device (e.g., a terminal device 200A) positioned in a cell 10A of the base station 100A. The base station 100A, for example, transmits a downlink signal to the terminal device 200A and receives an uplink signal from the terminal device 200A.

The base station 100A is logically connected to another base station on, for example, an X2 interface and can transmit and receive control information and the like. In addition, the base station 100A is logically connected to a so-called core network (not illustrated) on, for example, an S1 interface, and can transmit and receive control information and the like. Note that the communication between the devices can be physically relayed by various devices.

Here, the wireless communication device 100A illustrated in FIG. 1 is a macro cell base station and the cell 10A is a macro cell. Meanwhile, wireless communication devices 100B and 100C are master devices operating small cells 10B and 10C respectively. As an example, the master device 100B may be a small cell base station that is fixedly installed. The small cell base station 100B establishes each of a wireless backhaul link with the macro cell base station 100A and an access link with one or more terminal devices (e.g., a terminal device 200B) within the small cell 10B. Note that the wireless communication device 100B may be a relay node defined by the 3GPP. The master device 100C is a dynamic access point (AP). The dynamic AP 100C is a moving device dynamically operating the small cell 10C. The dynamic AP 100C establishes each of a wireless backhaul link with the macro cell base station 100A and an access link with one or more terminal devices (e.g., a terminal device 200C) within the small cell 10C. The dynamic AP 100C may be, for example, a terminal device in which hardware or software that can operate as a base station or a wireless access point is mounted. In this case, the small cell 10C is a dynamically formed localized network (Localized Network/Virtual Cell).

The cell 10A may be operated in an arbitrary wireless communication method, for example, LTE, LTE-A (LTE-Advanced), LTE-ADVANCED PRO, GSM (registered trademark), UMTS, W-CDMA, CDMA 200, WiMAX, WiMAX 2, IEEE 802.16, or the like.

Note that a small cell is a concept that can include various types of cell smaller than a macro cell (e.g., a femto cell, a nano cell, a pico cell, a micro cell, and the like) disposed to overlap or not to overlap a macro cell. In a certain example, a small cell is operated by a dedicated base station. In another example, a small cell is operated when a terminal serving as a master device temporarily operates as a small cell base station. A so-called relay node can also be regarded as a form of a small cell base station. A wireless communication device functioning as a parent station of a relay node is also called a donor base station. A donor base station may mean a DeNB in LTE or a parent station of a relay node more generally.

### (2) Terminal device 200

The terminal devices 200 can communicate in a cellular system (or a mobile communication system). The terminal devices 200 perform wireless communication with a wireless communication device (e.g., the base station 100A, the master device 100B or 100C) of the cellular system. For example, the terminal device 200A receives a downlink signal from the base station 100A and transmits an uplink signal to the base station 100A.

In addition, the terminal devices 200 are not limited only to so-called UE, and a so-called low cost terminal (low cost UE), for example, an MTC terminal, an eMTC (Enhanced MTC) terminal, or an NB-IoT terminal may be applied.

### (3) Supplement

Although the schematic configuration of the system 1 has been introduced above, the present technology is not limited to the example illustrated in FIG. 1. For example, a configuration including no master device, a Small Cell Enhancement (SCE), a heterogeneous network (HetNet), an MTC network, or the like can be employed as a configuration of the system 1. In addition, as another example of the configuration of the system 1, a master device may be connected to a small cell and constitute a cell under the small cell.

### <1.2. Review of communication via relay terminal>

Next, an example of a case in which communication between a so-called remote terminal such as a wearable terminal and a base station is realized by a terminal device, which is configured to be movable, such as a smartphone behaving as a relay terminal will be described, and the technical task of the system according to the present embodiment will be summarized. Note that a terminal device that operates as a relay terminal will also be referred to as a "relay terminal 100C" below. In addition, a terminal device that operates as a remote terminal will also be referred to as a "remote terminal 200C."

Technologies relating to the Internet-of-things (IoT) have gained attention in recent years, and research and development thereon has been actively conducted. Things need to be connected to networks in the IoT, and thus wireless communication has become an ever more important theme of technology. The current 3GPP has standardized communication methods specialized for IoT terminals, such as Machine Type Communication (MTC) and Narrowband IoT (NB-IoT). As characteristics of such communication methods for IoT terminals, realization of lower power consumption, low costs, and large coverage may be exemplified. In particular, communication with lower power consumption is very important for low-cost terminals such as IoT terminals, and further enhancement thereof is expected in the future.

As an example of representative low-cost terminals, so-called wearable terminals may be exemplified. Wearable terminals are required to have low power consumption and highly reliable communication, and also large capacity communication in accordance with situations. In order to cover such application cases, the 3GPP started the standardization of Further Enhancement D2D (FeD2D) in 2016. Since wearable terminals are present close to users, a communication distance can be shortened and communication with low power consumption and highly reliable communication can be realized by using relay communication using terminals such as smartphones.

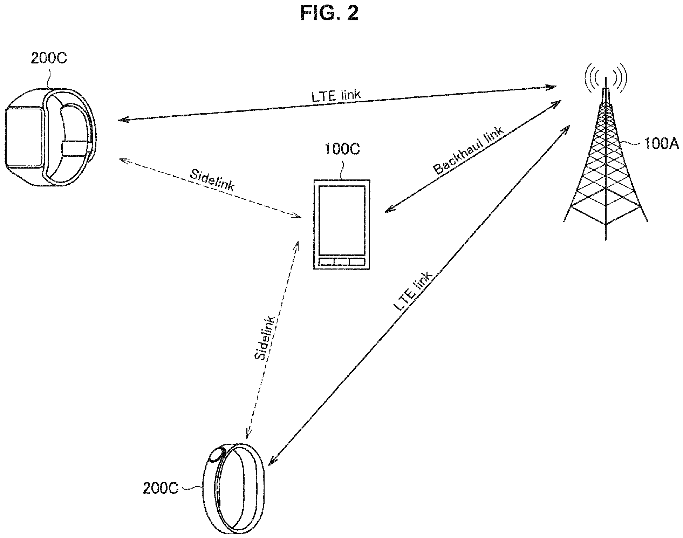

For example, FIG. 2 is an explanatory diagram for describing an overview of communication via a relay terminal. A smartphone or the like held by a user, for example, can be assumed as a relay terminal 100C. In addition, a wearable terminal or the like, for example, can be assumed as a remote terminal 200C that performs communication with the base station 100A via the relay terminal 100C. The relay terminal 100C performs, for example, so-called LTE communication (which will also be referred to as "backhaul link communication" below) with the base station 100A, and on the other hand, performs sidelink communication with the remote terminal 200C. The remote terminal 200C performs communication with the base station 100A via the relay terminal 100C. In this case, the relay terminal 100C can be a communication device that relays communication between the remote terminal 200C and the base station 100A. In addition, the remote terminal 200C can also perform direction communication with the base station 100A.

Meanwhile, in relay communication between the remote terminal 200C such as a wearable terminal and the base station 100A, the presence of the relay terminal 100C is very important since the remote terminal 200C communicates with the base station 100A via the relay terminal 100C. On the other hand, in a case in which the relay communication is realized on the basis of the known standard (for example, Enhanced D2D), IP relay is performed, and wireless link communication (backhaul link communication) between the base station 100A and the relay terminal 100C and wireless link communication (access link communication) between the relay terminal 100C and the remote terminal 200C are independently managed.

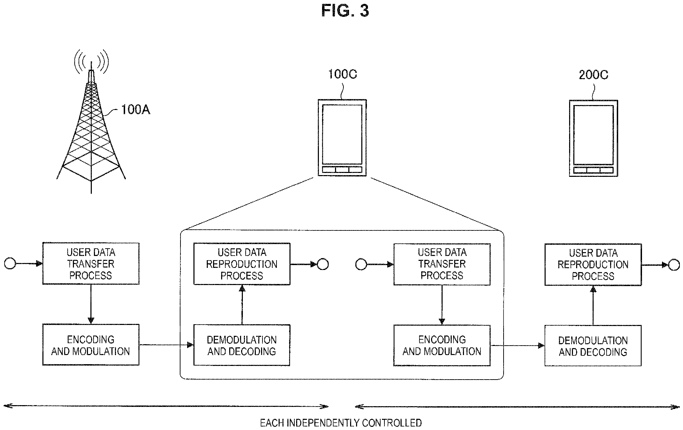

For example, FIG. 3 is an explanatory diagram for describing an example of a schematic configuration of relay communication and illustrates an example of relay communication based on a known standard mainly in a case in which data is transmitted from the base station 100A via the relay terminal 100C to the remote terminal 200C. Specifically, the base station 100A performs predetermined transfer processes on data which is a transmission target (also referred to as "user data") to perform encoding, modulation, and the like and transmits the user data to the relay terminal 100C. Subsequently, in the example illustrated in FIG. 3, when the relay terminal 100C receives the user data from the base station 100A, the relay terminal 100C demodulates and decodes the user data and performs a predetermined reproduction process to acquire the user data. Then, the relay terminal 100C performs the predetermined transfer processes on the acquired user data again to perform encoding, modulation, and the like and transmits the user data to the remote terminal 200C. In addition, when the remote terminal 200C receives the user data from the relay terminal 100C, the remote terminal 200C demodulates and decodes the user data and performs the predetermined reproduction process to acquire the user data.

As described above, in the example illustrated in FIG. 3, even in a case in which the user data is transmitted from the base station 100A to the remote terminal 200C, the communication between the base station 100A and the relay terminal 100C and the communication between the relay terminal 100C and the remote terminal 200C are independently controlled. Because of such a configuration, in the relay communication based on the known standard, it is difficult to guarantee communication quality of end-to-end (E2E) in the relay communication between the base station 100A and the remote terminal 200C via the relay terminal 100C.

In particular, in the relay communication based on the known standard, control of HARQ is performed in only a backhaul link between the base station 100A and the relay terminal 100C and the control of HARQ is not performed in an access link between the relay terminal 100C and the remote terminal 200C.

In view of such circumstances, the present disclosure proposes an example of a technology for enabling quality of a wireless link of E2E to be guaranteed in relay communication between the base station 100A and the remote terminal 200C via the relay terminal 100C.

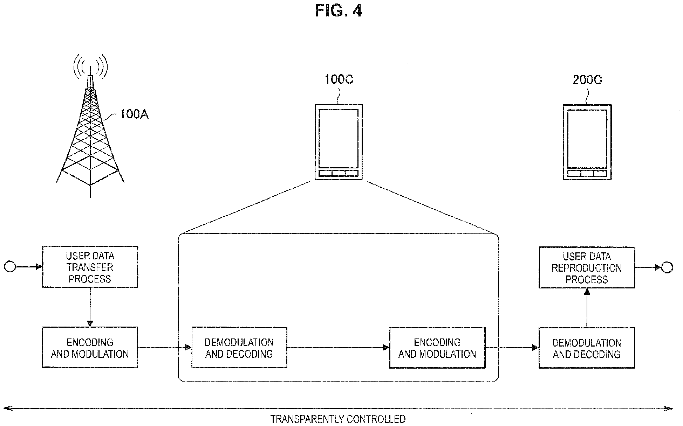

For example, FIG. 4 is an explanatory diagram for describing an overview of the relay communication in the system according to the embodiment of the present disclosure. As understood at the time of comparison of the example illustrated in FIG. 4 to the example illustrated in FIG. 3, the user data is encoded and modulated again to be transmitted to the remote terminal 200C (that is, layer 2 relay is introduced) after the user data is demodulated and decoded in the relay terminal 100C in the system according to the embodiment. On the basis of such a configuration, in the system according to the embodiment, a wireless function (for example, retransmission control or the like) other than modulation, demodulation, encoding, and decoding processes is processed transparently between the base station 100A and the remote terminal 200C.

Thus, in the system according to the embodiment, it is possible to guarantee quality of a wireless link of E2E in relay communication between the base station 100A and the remote terminal 200C via the relay terminal 100C.

Accordingly, in the present disclosure, a structure for realizing various kinds of control particularly based on hybrid automatic repeat request (HARQ) will be focused to make description in more detail as an example of a structure for guaranteeing communication quality of E2E in relay communication between the base station 100A and the remote terminal 200C via the relay terminal 100C.

### «2. Configuration example»

Next, examples of functional configurations of a base station 100 and a terminal device 200 included in the system according to the present embodiment will be described.

### <2.1. Configuration example of base station>

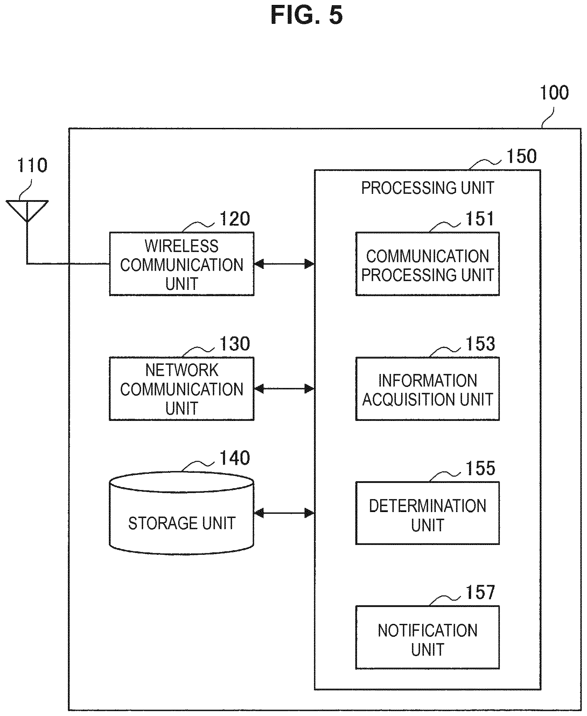

First, a configuration of the base station 100 according to an embodiment of the present disclosure will be described with reference to FIG. 5. FIG. 5 is a block diagram illustrating an example of a configuration of the base station 100 according to an embodiment of the present disclosure. Referring to FIG. 5, the base station 100 includes an antenna unit 110, a wireless communication unit 120, a network communication unit 130, a storage unit 140, and a processing unit 150.

### (1) Antenna unit 110

The antenna unit 110 radiates a signal output by the wireless communication unit 120 as a radio wave into a space. In addition, the antenna unit 110 converts a radio wave in a space into a signal and outputs the signal to the wireless communication unit 120.

### (2) Wireless communication unit 120

The wireless communication unit 120 transmits and receives signals. For example, the wireless communication unit 120 transmits a downlink signal to a terminal device and receives an uplink signal from a terminal device.

In addition, in the system 1 according to the present embodiment, there may be a case in which a terminal device operates as a relay terminal (the wireless communication device 100C in FIG. 1) and relays communication between a remote terminal (the terminal device 200C in FIG. 1) and a base station as described above. In such a case, for example, the wireless communication unit 120 of the wireless communication device 100C corresponding to a relay terminal may transmit and receive sidelink signals to and from the remote terminal.

### (3) Network communication unit 130

The network communication unit 130 transmits and receives information. For example, the network communication unit 130 transmits information to another node and receives information from another node. The other node includes, for example, another base station and a core network node.

Note that, in the system 1 according to the present embodiment, there may be a case in which a terminal device operates as a relay terminal and relays communication between a remote terminal and a base station as described above. In such a case, for example, the wireless communication device 100C corresponding to the relay terminal may not have the network communication unit 130.

### (4) Storage unit 140

The storage unit 140 temporarily or permanently stores programs and various types of data for operations of the base station 100.

### (5) Processing unit 150

The processing unit 150 provides various functions of the base station 100. The processing unit 150 includes a communication processing unit 151, an information acquisition unit 153, a determination unit 155, and a notification unit 157. Note that the processing unit 150 can further include constituent elements other than these constituent elements. That is, the processing unit 150 can also perform an operation other than operations of the constituent elements.

Operations of the communication processing unit 151, the information acquisition unit 153, the determination unit 155, and the notification unit 157 will be described in detail below.

### <2.2. Configuration example of terminal device>

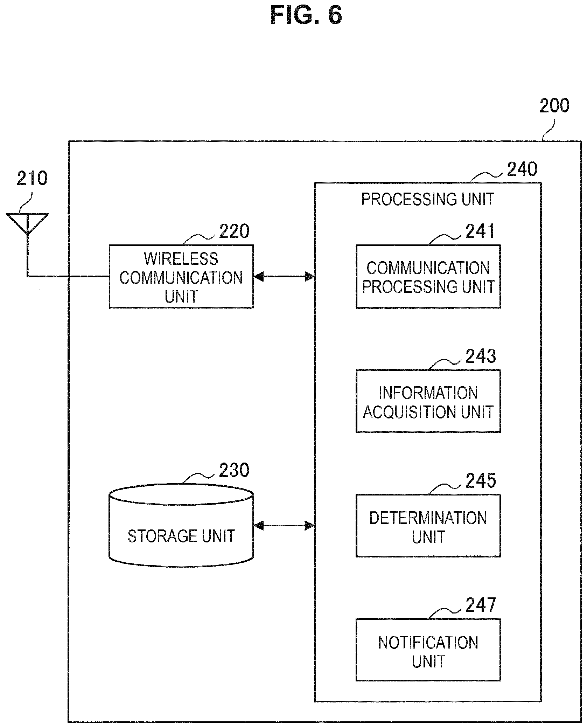

Next, an example of a configuration of the terminal device 200 according to the embodiment of the present disclosure will be described with reference to FIG. 6. FIG. 6 is a block diagram illustrating an example of a configuration of the terminal device 200 according to the embodiment of the present disclosure. The terminal device 200 includes an antenna unit 210, a wireless communication unit 220, a storage unit 230, and a processing unit 240 as illustrated in FIG. 6.

### (1) Antenna unit 210

The antenna unit 210 radiates a signal output by the wireless communication unit 220 as a radio wave into a space. In addition, the antenna unit 210 converts a radio wave in a space into a signal and outputs the signal to the wireless communication unit 220.

### (2) Wireless communication unit 220

The wireless communication unit 220 transmits and receives signals. For example, the wireless communication unit 220 receives a downlink signal from a base station and transmits an uplink signal to a base station.

In addition, in the system 1 according to the present embodiment, there are cases in which a terminal device operates as a relay terminal and relays communication between a remote terminal and a base station as described above. In such a case, for example, the wireless communication unit 220 of the terminal device 200C operating as a remote terminal may transmit and receive a sidelink signal to and from the relay terminal.

### (3) Storage unit 230

The storage unit 230 temporarily or permanently stores programs and various types of data for operations of the terminal device 200.

### (4) Processing unit 240

The processing unit 240 provides various functions of the terminal device 200. The processing unit 240 includes, for example, a communication processing unit 241, an information acquisition unit 243, a determination unit 245, and a notification unit 247. Note that the processing unit 240 can further include constituent elements other than these constituent elements. That is, the processing unit 240 can also perform an operation other than operations of the constituent elements.

Operations of the communication processing unit 241, the information acquisition unit 243, the determination unit 245, and the notification unit 247 will be described below in detail.

### «3. First embodiment»

### <3.1. Overview>

Next, technical features according to an embodiment of the present disclosure will be described separately in each embodiment. First, according to a first embodiment, an example of a structure for notifying of a reception result (ACK/NACK) of data on the basis of HARQ between the base station 100A, the relay terminal 100C, and the remote terminal 200C in relay communication of the system according to the present embodiment will be described.

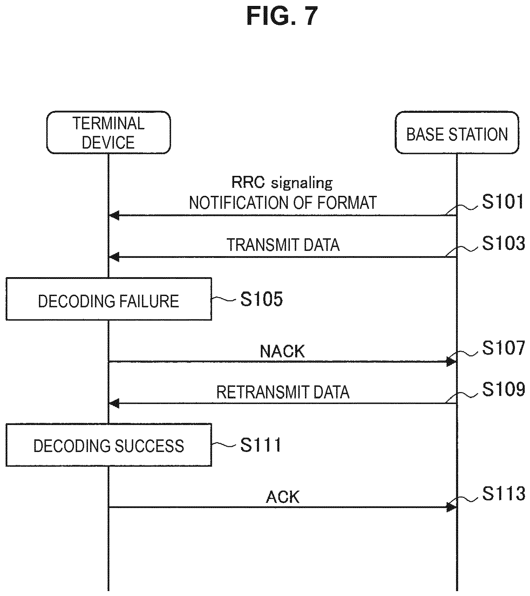

First, to further facilitate understanding of features of the system according to the embodiment, an overview of HARQ in communication between the base station 100 and the terminal device 200 based on a known standard will be described with reference to FIG. 7. FIG. 7 is an explanatory diagram for describing the overview of HARQ and illustrates an example of a case in which the base station 100 transmits data to the terminal device 200 and the terminal device 200 notifies the base station 100 of a reception result of the data.

As illustrated in FIG. 7, the base station 100 (the notification unit 157) first notifies of a format of a control channel (for example, a physical uplink control channel (PUCCH)) used for the terminal device 200 to notify the base station 100 of ACK/NACK on the basis of RRC signaling (S101). Subsequently, the base station 100 (the communication processing unit 151) transmits the data to the terminal device 200 (S103).

When data transmitted from the base station 100 is received, the terminal device 200 (the communication processing unit 241) decodes the received data. Note that, herein, the terminal device 200 is assumed to fail to decode the data (S105). In this case, on the basis of the RRC signaling, the terminal device 200 (the notification unit 247) notifies the base station 100 of NACK on the basis of the format of which the base station 100 notifies (S107). That is, the base station 100 (the information acquisition unit 153) receives the notification of NACK as a response to the transmitted data from the terminal device 200. Thus, on the basis of the NACK that is notified of, the base station 100 (the determination unit 155) can recognize that the terminal device 200 fails to receive the data.

When the base station 100 (the communication processing unit 151) recognizes that the terminal device 200 fails to receive the data on the basis of the NACK of which the terminal device 200 notifies, the base station 100 retransmits the data to the terminal device 200 (S109).

When the terminal device 200 (the communication processing unit 241) receives the data retransmitted from the base station 100, the terminal device 200 decodes the received data. Note that, herein, the terminal device 200 is assumed to succeed in decoding the data (S111). In this case, on the basis of the RRC signaling, the terminal device 200 (the notification unit 247) notifies the base station 100 of ACK on the basis of the format of which the base station 100 notifies (S113). That is, the base station 100 (the information acquisition unit 153) is notified of ACK as a response to the retransmitted data by the terminal device 200. Thus, on the basis of the ACK that is notified of, the base station 100 (the determination unit 155) can recognize that the terminal device 200 succeeds in receiving the data.

Note that, in a case in which the decoding of the data transmitted from the base station 100 is first successful, it is needless to say that the terminal device 200 may notify the base station 100 of ACK as the response. In addition, in a case in which the data retransmitted from the base station 100 is decoded, it is needless to say that the terminal device 200 may notify the base station 100 of NACK again. In addition, when the terminal device 200 notifies the base station 100 of ACK or NACK, the terminal device 200 may notify of ACK or NACK on the basis of so-called piggyback using a physical uplink shared channel (PUSCH).

In addition, the downlink (DL) communication from the base station 100 to the terminal device 200 has been mainly described above, but HARQ can also be applied to uplink (UL) communication from the terminal device 200 to the base station 100. In this case, in a case in which data is transmitted from the terminal device 200 to the base station 100, it is sufficient if the base station 100 notifies the terminal device 200 of ACK or NACK using a physical HARQ indicator channel (PHICH).

The overview of HARQ in the communication between the base station 100 and the terminal device 200 has been described on the basis of the known standard with reference to FIG. 7.

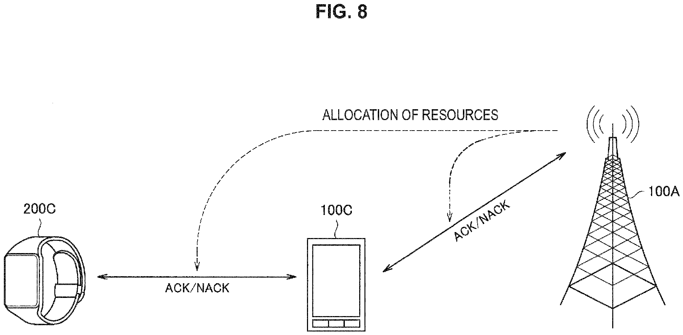

Next, as an overview of the system according to the embodiment, an example of a structure for notifying of a reception result (ACK/NACK) of the data on the basis of HARQ between the base station 100A, the relay terminal 100C, and the remote terminal 200C will be described with reference to FIG. 8. FIG. 8 is an explanatory diagram for describing an overview of the system according to the embodiment.

As illustrated in FIG. 8, in the relay communication between the base station 100A and the remote terminal 200C via the relay terminal 100C, communication (backhaul link communication) between the base station 100A and the relay terminal 100C and communication (access link communication) between the relay terminal 100C and the remote terminal 200C are performed. That is, in a case in which data is transmitted and received between the base station 100A and the relay terminal 100C and between the relay terminal 100C and the remote terminal 200C, a reception result (ACK/NACK) of the data from a transmission destination to a transmission source is notified of.

On the assumption of such circumstances, in the system according to the embodiment, for example, the base station 100A may allocate resources for notifying of the reception result of the data to both the backhaul link and the uplink. In addition, as another example, the base station 100A may allocate resources for notifying of the reception result of the data to, for example, only the backhaul link. In this case, the allocation of the resources for notifying of the reception result of the data to the access links may be performed by the relay terminal 100C. On the basis of such a structure, the relay terminal 100C notifies the base station 100A of the reception result in a case in which the reception result (ACK/NACK) of the data is received from the remote terminal 200C. Thus, the base station 100A can recognize the reception result of the data transmitted to the remote terminal 200C in the remote terminal 200C.

Note that a case in which the plurality of remote terminals 200C is connected to the relay terminal 100C can also be assumed. Therefore, for example, when the number of remote terminals 200C connected to the relay terminal 100C increases, more resources are necessary in some cases in order for the relay terminal 100C to notify the base station 100A of the reception result of the data (that is, the reception result of which the remote terminal 200C notifies) in the remote terminal 200C.

In view of such circumstances, in the system according to the embodiment, the base station 100A controls the allocation of the resources for notifying of the reception result of the data to the backhaul link in accordance with information regarding the remote terminals 200C connected to the relay terminal 100C (for example, the number of remote terminals 200C). Such control enables the relay terminal 100C to guarantee the resources for notifying the base station 100A of the reception result of the data in the remote terminal 200C in a more preferable aspect, for example, even in a case in which the number of remote terminals 200C connected to the relay terminal 100C increases.

As the overview of the system according to the embodiment, the example of the structure for notifying of the reception result (ACK/NACK) of the data on the basis of HARQ between the base station 100A, the relay terminal 100C, and the remote terminal 200C has been described above with reference to FIG. 8.

### <3.2. Technical features>

Next, technical features of the system according to the embodiment will be described in more detail.

### (1) Process

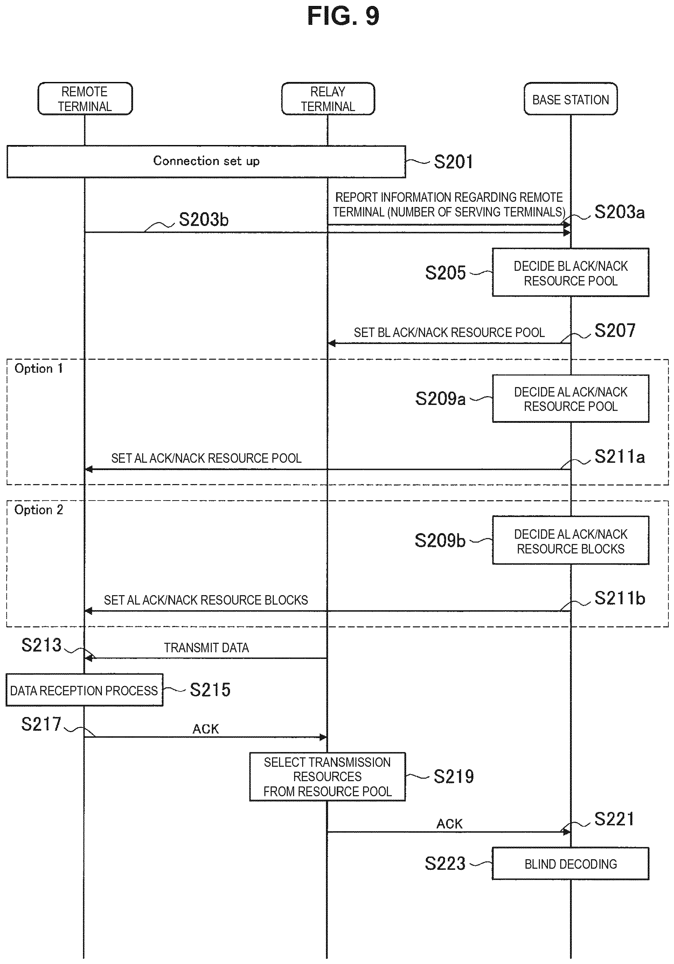

First, an example of a flow of a series of processes of the relay communication in the system according to the embodiment will be described with reference to FIG. 9. FIG. 9 is a sequence diagram illustrating the example of the flow of the series of processes of relay communication in the system according to the embodiment and particularly illustrates a flow of processes related to the allocation of the resources for notifying of ACK and NACK on the basis of HARQ.

As illustrated in FIG. 9, the remote terminal 200C and the relay terminal 100C first establish communication via a wireless link (that is, an access link) to mutually transmit and receive data (S201). When the communication between the remote terminal 200C and the relay terminal 100C is established, the relay terminal 100C (the notification unit 157) notifies the base station 100A of information (for example, the number of serving terminals or the like) regarding the remote terminal 200C connected to the relay terminal 100C (S203a). In addition, as another example, the remote terminal 200C (the notification unit 247) may notify the base station of information regarding the remote terminal 200C via a direct wireless link (hereinafter also referred to as a "Uu link") with the base station 100A (S203b).

Subsequently, on the basis of the information regarding the remote terminal 200C that is notified of, the base station 100A allocates the resources for notifying of the reception result (ACK/NACK) of the data on the basis of HARQ to the backhaul link with the relay terminal 100C.

Specifically, on the basis of the information regarding the remote terminal 200C that is notified of, the base station 100A (the determination unit 155) decides the resources which can be used to notify of the reception result (ACK/NACK) of the data via the backhaul link between the base station 100A and the relay terminal 100C (S205). Then, the base station 100A (the communication processing unit 151) allocates the resources decided on the basis of the information regarding the remote terminal 200C to the backhaul link (S207). Note that, at this time, the base station 100A may allocate a resource pool which can be used to notify of ACK and NACK to the backhaul link. Note that, as another example, the base station 100A may schedule the resources for notifying of ACK and NACK and allocate the resources to the backhaul link on the basis of the scheduling result. In this case, for example, the base station 100A may decide resource blocks necessary for notifying of ACK and NACK (for example, the number of resource blocks) on the basis of the information regarding the remote terminal 200C that is notified of. Note that the details of a process related to the allocation of the resources to the backhaul link by the base station 100A will be described separately later.

In addition, the base station 100A may allocate the resources for notifying of the reception result (ACK/NACK) of the data on the basis of HARQ to the access link between the relay terminal 100C and the remote terminal 200C on the basis of the information regarding the remote terminal 200C that is notified of.

As a specific example, the base station 100A may allocate a resource pool which can be used for notifying of the reception result (ACK/NACK) of the data via the access link (Option 1). In this case, the base station 100A (the determination unit 155) decides the resource pool which can be used for notifying of ACK and NACK on the basis of the information regarding the remote terminal 200C that is notified of (S209a). Then, the base station 100A (the communication processing unit 151) may allocate the resource pool decided on the basis of the information regarding the remote terminal 200C to the access link (S211a).

In addition, in another example, the base station 100A may schedule the resource blocks for notifying of the reception result (ACK/NACK) of the data via the access link and allocate the resources to the access link on the basis of the scheduling result (Option 2). In this case, the base station 100A (the determination unit 155) decides the resource blocks (for example, the number of resource blocks) necessary for notifying of ACK and NACK on the basis of the information regarding the remote terminal 200C that is notified of (S209b). Then, the base station 100A (the communication processing unit 151) may schedule the resources for performing ACK and NACK in accordance with the decision result of the resource blocks and allocate the resources to the access link on the basis of the scheduling result (S211b).

In addition, in still another example, instead of the base station 100A, the relay terminal 100C may allocate the resources which can be used for notifying of ACK and NACK to the access link.

Note that the base station 100A may explicitly distinguish transmission and reception results of the data via the backhaul link between the relay terminal 100C and the base station 100A from transmission and reception results of the data via the access link between the relay terminal 100C and the remote terminal 200C. Accordingly, in the following description, ACK and NACK notified of as the transmission and reception results of the data via the backhaul link between the relay terminal 100C and the base station 100A are also referred to as "BL ACK" and "BL NACK." In addition, ACK and NACK notified of as the transmission and reception results of the data via the access link between the relay terminal 100C and the remote terminal 200C are also referred to as "ALACK" and "AL NACK."

Subsequently, when data is transmitted from the relay terminal 100C to the remote terminal 200C via the access link (S213), the remote terminal 200C (the communication processing unit 241) performs a process of receiving the data (S215). Note that, in the description, the remote terminal 200C is assumed to succeed in decoding the data. In this case, the remote terminal 200C (the notification unit 247) transmits ACK (that is, AL ACK) to the relay terminal 100C using the resources allocated to the access link as a reception result of the data transmitted from the relay terminal 100C (S217).

When the relay terminal 100C (the notification unit 157) receives the reception result (for example, AL ACK) of the data from the remote terminal 200C, the relay terminal 100C transmits the reception result of the data to the base station 100A using the resources allocated to the backhaul link (S221). Note that, at this time, in a case in which the resource pool is allocated to the backhaul link, the relay terminal 100C selects transmission resources on the basis of a predetermined condition from the resource pool (S219) and uses the transmission resources to transmit the reception result of the data (S221).

In addition, the base station 100A attempts to decode the reception result by performing blind decoding on the reception result of the data transmitted via the backhaul link from the relay terminal 100C, for example, on the basis of information retained by the base station 100A at a predetermined timing (S223). Through the above-described control, the base station 100A is notified of the reception result (that is, AL ACK/AL NACK) of the data in the remote terminal 200C in E2E via the relay terminal 100C.

Note that, although the DL communication in which the data is transmitted from the base station 100A to the remote terminal 200C via the relay terminal 100C has been mainly described with reference to FIG. 9 in the above-described example, the same applies to UL communication with regard to a process related to the allocation of the resources for notifying of the reception result of the data. That is, in the UL communication, it is sufficient if the subject and the object are switched with regard to each of the transmission of the data and the notification of the reception result (ACK/NACK) of the data in the example illustrated in FIG. 9.

The example of the flow of the series of processes of the relay communication in the system according to the embodiment has been described above with reference to FIG. 9.

### (2) Method of allocating resources to backhaul link

Next, the details of a method of allocating resources which can be used for notifying of ACK and NACK to the backhaul link will be described. As described above, as the method in which the base station 100A allocates the resources to the backhaul link, the method of allocating the resources on the basis of the scheduling result of the notification of ACK and NACK and the method of allocating the resource pool have been exemplified. Accordingly, hereinafter, the method of allocating the resources on the basis of the scheduling result of the notification of ACK and NACK and the method of allocating the resource pool will be described separately.

### (2-1) Method of allocating resources on basis of scheduling result

First, an example of the method of allocating the resources to the backhaul link on the basis of the scheduling result of the notification of ACK and NACK will be described.

As described above, the base station 100A allocates the resources which can be used for notifying of ACK and NACK to the backhaul link on the basis of information regarding the remote terminal 200C of which the relay terminal 100C or the remote terminal 200C notifies. Note that a timing at which the base station 100A allocates the resources to the backhaul link may be set in a semi-persistent manner from a network side or may be set in a fixed manner, for example. In addition, the timing may be set dynamically.

As the information regarding the remote terminal 200C, for example, the number of remote terminals 200C (that is, the number of serving terminals) connected to the relay terminal 100C, a traffic amount of the remote terminal 200C, and the like can be exemplified. In such a configuration, for example, even in a situation in which AL ACK and AL NACK are transmitted from each of the plurality of remote terminals 200C connected to the relay terminal 100C to the base station 100A via the relay terminal 100C, a sufficient amount of resources can be guaranteed.

In addition, on the basis of the information regarding the remote terminal 200C that is notified of, the base station 100A may change a format of a control channel (for example, a PUCCH) used for the relay terminal 100C to notify of ACK and NACK. For example, the base station 100A allocates a format with which the relay terminal 100C can be simultaneously notified of the plurality of ACKs and NACKs in a case in which the notification of ACKs and NACKs (that is, AL ACKs and AL NACKs) from the plurality of remote terminals 200C via the relay terminal 100C is supported. As an example of such a format, "Format 4" or the like defined in the rules of 3GPP can be exemplified.

In addition, the foregoing format is not limited to known formats and a new format may be defined. As a specific example, a new format in which an allocation amount of the resources for notifying of ACK and NACK in accordance with the number of remote terminals 200C connected to the relay terminal 100C can be changed may be defined.

Similarly, the base station 100A may change a format of a control channel (for example, a physical sidelink control channel (PSCCH)) used for one side of the relay terminal 100C and the remote terminal 200C for notifying the other side thereof of ACK and NACK on the basis of the information regarding the remote terminal 200C that is notified of.

Note that it is sufficient if the allocation of the format to the relay terminal 100C and the remote terminal 200C by the base station 100A is performed on the basis of, for example, predetermined signaling (for example, RRC signaling).

In addition, in a case in which the relay terminal 100C is notified of AL ACK and AL NACK by the remote terminal 200C and the base station 100A is notified of these AL ACK and AL NACK, so-called piggyback may be used. As a specific example, in a case in which the relay terminal 100C maintains an uplink transmission signal, the relay terminal 100C may piggyback AL ACK or AL NACK of which the remote terminal 200C notifies on the PUSCH when the uplink transmission signal is transmitted. In addition, as another example, a case in which the relay terminal 100C maintains the uplink transmission signal and the relay terminal 100C notifies the base station 100A of BL ACK or BL NACK will be focused on. In this case, when the relay terminal 100C transmits the uplink transmission signal, the relay terminal 100C may piggyback BL ACK or BL NACK of which the base station 100A is notified and AL ACK or AL NACK of which the remote terminal 200C has notified on the PUSCH.

### (2-2) Method of allocating resource pool

Next, an example of the method of allocating the resource pool which can be used for notifying of ACK and NACK to the backhaul link will be described.

The base station 100A allocates the resource pool which can be used for notifying of ACK and NACK to the backhaul link on the basis of the information regarding the remote terminal 200C of which the relay terminal 100C or the remote terminal 200C notifies. At this time, on the basis of the information regarding the remote terminal 200C that is notified of, the base station 100A decides a size of the resource pool so that the relay terminal 100C can guarantee a sufficient amount of the resources for notifying the base station 100A of ACK and NACK of which one or more remote terminals 200C notify.

For example, the base station 100A may notify at least one of the relay terminal 100C or the remote terminal 200C of whether or not feedback transmission is performed using the resource pool which can be used for notifying of ACK and NACK. The relay terminal 100C or the remote terminal 200C may receive this notification and notify the base station 100A of the information regarding the remote terminal 200C.

As the information regarding the remote terminal 200C, for example, the number of remote terminals 200C (that is, the number of serving cells) connected to the relay terminal 100C, a traffic amount of the remote terminal 200C, and the like can be exemplified. In addition, as the information regarding the remote terminal 200C, terminal identification information such as a radio network temporary ID (RNTI) or an international mobile subscriber identity (IMSI), a quality of service (QoS) level, priority information, a sum of the number of transport blocks, a buffer status report, or the like may be used.

In addition, the base station 100A may allocate the resource pool which can be used for notifying of ACK and NACK to the relay terminal 100C by allocating the resource pool to the PUSCH or the PDSCH in a semi-persistent manner. In addition, for example, it is sufficient if the base station 100A allocates the resource pool so that a round trip time of HARQ is satisfied.

Note that the base station 100A may notify the relay terminal 100C of, for example, a cycle, a period, offset information from a reference point (a system frame number (SFN) or the like), time frequency information of a pool, or the like as the information regarding the resource pool allocated to the backhaul link using a system information block (SIB) or the like.

The relay terminal 100C selects resources to be used to transmit ACK and NACK (for example, BL ACK, BL NACK, AL ACK, or AL NACK) to the base station 100A from the resource pool allocated by the base station 100A.

In particular, the relay terminal 100C selects the resources for notifying the base station 100A of AL ACK and AL NACK of which the remote terminal 200C notifies on the basis of a predetermined condition. As a specific example, the relay terminal 100C may use the information regarding the remote terminal 200C (for example, terminal identification information, the number of retransmissions of data, priority information of a transmission packet, positional information regarding the remote terminal 200C, or the like) as a condition for selecting the resources. In addition, the relay terminal 100C may use information for managing the remote terminal 200C in the relay terminal 100C as the condition for selecting the resources. As the information for managing the remote terminal 200C in the relay terminal 100C, for example, identification information of the remote terminal 200C (information granted from the relay terminal 100C, the base station 100A, or a higher layer), packet priority information, terminal priority information, or the like can be exemplified. Note that the relay terminal 100C may use at least some of the above-described information as the condition for selecting the resources.

Note that as the predetermined condition for selecting the resources used for the relay terminal 100C to transmit ACK and NACK from the resource pool, it is preferable to set a common condition between the base station 100A and the relay terminal 100C. Therefore, for example, the base station 100A may notify the relay terminal 100C of the predetermined condition. In such a configuration, the base station 100A can recognize which resources are used for the notification of AL ACK and AL NACK from which remote terminal 200C among the resources of the resource pool.

In addition, a case in which the size of the resource pool is small and it is difficult for the relay terminal 100C to newly select resources from the resource pool can be assumed. In such a circumstance, for example, the relay terminal 100C may multiplex AL ACKs or AL NACKs of which one or more remote terminals 200C notify and transmit the multiplexed AL ACKs and AL NACKs to the base station 100A. In this case, the relay terminal 100C may notify the base station 100A that AL ACKs or AL NACKs are multiplexed and of information regarding the remote terminal 200C multiplying AL ACKs or AL NACKs. In addition, in a case in which the relay terminal 100C multiplexes the information, the relay terminal 100C may multiplex the information for each of various kinds of priorities such as a packet priority and a terminal priority.

### (3) Method of allocating resources to access link

Next, the details of the method of allocating the resources which can be used for notifying of ACK and NACK to the access link will be described. As described above, the base station 100A may allocate the resource pool (Option 1) or may allocate the resources on the basis of a scheduling result of the notification of ACK and NACK (Option 2) when the resources are allocated to the access link.

In addition, the base station 100A may notify at least one of the relay terminal 100C or the remote terminal 200C of information regarding setting of the resources which can be used for notifying ACK and NACK allocated to the access link in advance at a predetermined timing. Note that the timing at which the base station 100A performs the notification may be set, for example, in a semi-persistent manner from a network side or may be set in a fixed manner. In addition, the timing may be set dynamically.

Note that in a case in which the resource pool is allocated to the access link (Option 1), the base station 100A may notify at least one of the relay terminal 100C or the remote terminal 200C of the information regarding the resource pool (for example, a cycle, a period, offset information from a reference point (SFN or the like), time frequency information of a pool, or the like) using an SIB or the like. In addition, in a case in which the remote terminal 200C is notified of the information regarding the resource pool, the base station 100A may directly notify the remote terminal 200C of the information regarding the resource pool via the Uu link or may indirectly notify the remote terminal 200C of the information regarding the resource pool through the relay communication via the relay terminal 100C.

In addition, in the case in which the resource pool is allocated to the access link (Option 1), communication via the access link may be encoded on the basis of a predetermined encoding scheme. In this case, for example, a different orthogonal code may be allocated for each relay terminal 100C or each remote terminal 200C or another non-orthogonal multiplexing scheme may be used.

In addition, in the case in which the resource pool is allocated to the access link (Option 1), the remote terminal 200C may select the resources for notifying the relay terminal 100C of ACK and NACK at random from the resource pool at a predetermined timing. In this case, the timing at which the remote terminal 200C selects the resources from the resource pool may be set in a semi-persistent manner from a network side or may be set in a fixed manner, for example. In addition, the timing may be set dynamically.

In addition, as another example, the remote terminal 200C may select the resources for notifying the relay terminal 100C of ACK and NACK from the resource pool on the basis of a predetermined condition. Specifically, the remote terminal 200C may select the resources from the resource pool using at least some of terminal identification information of the remote terminal 200C, the number of retransmissions of data, priority information of a transmission packet, positional information regarding the remote terminal 200C, and terminal identification information (information granted from the relay terminal 100C, the base station 100A, or a higher layer) of the remote terminal 200C managed on the side of the relay terminal 100C.

In addition, as still another example, the remote terminal 200C may use resources instructed from the base station 100A or the relay terminal 100C.

Note that the example of the case in which the remote terminal 200C selects the resources to be used for the notification from the resource pool has been described above focusing on the case in which the remote terminal 200C notifies the relay terminal 100C of ACK or NACK. In contrast, even in a case in which the relay terminal 100C notifies the remote terminal 200C of ACK and NACK, the relay terminal 100C may select the resources from the resource pool in accordance with a method similar to the method in the above-described case.

Next, a case in which the resources are allocated on the basis of the scheduling result of the notification of ACK and NACK to the access link (Option 2) will be focused on. In this case, the base station 100A may notify at least one of the relay terminal 100C or the remote terminal 200C of information regarding the scheduled resource block (for example, positional information regarding the resource block). Note that in a case in which the remote terminal 200C is notified of the information regarding the resource block, the base station 100A may directly notify the remote terminal 200C of the information regarding the resource block via the Uu link or may indirectly notify the remote terminal 200C of the information regarding the resource block through the relay communication via the relay terminal 100C.

### (4) Other supplements

In a case in which the resource pool which can be used for notifying of ACK and NACK is allocated to the backhaul link and the access link, the base station 100A may not specify a timing at which AL ACK and AL NACK from the remote terminal 200C are notified of. Therefore, in this case, the base station 100A may attempt to decode AL ACK and AL NACK from the remote terminal 200C by performing blind decoding on the reception result of the data transmitted from the relay terminal 100C at a predetermined timing.

In addition, a timing at which the base station 100A allocates the resource pool may be set in a semi-persistent manner from a network side or may be set in a fixed manner, for example. In addition, the timing may be set dynamically.

In addition, in a case in which the resources (that is, semi-persistent scheduling (SPS) resources) allocated in the semi- persistent manner in advance are not used (that is, not activated), the base station 100A may use the resources for another use.

The technical features of the system according to the embodiment have been described in more detail with reference to FIG. 9.

### <3.3. Evaluation>

As described above, in the information processing system according to the embodiment, the base station 100A controls the allocation of the resources for notifying the reception result (ACK/NACK) of the data to the backhaul link in accordance with information regarding the remote terminal 200C connected to the relay terminal 100C. In addition, the base station 100A may control the allocation of the resources for notifying the reception result (ACK/NACK) of the data to the access link in accordance with information regarding the remote terminal 200C.

In the above-described configuration, for example, even in a case in which the number of remote terminals 200C connected to the relay terminal 100C increases, the resources for notifying the base station 100A of the reception result of the data in the remote terminal 200C can be guaranteed in a more preferable aspect. That is, in the relay communication between the base station 100A and the remote terminal 200C via the relay terminal 100C in the system according to the embodiment, it is possible to realize the control of the communication resources in a more preferable aspect to guarantee the quality of the wireless link of E2E.

### «4. Second embodiment»

### <4.1. Overview>

Next, as a second embodiment, an example of a structure for realizing retransmission control of data based on HARQ in relay communication between the base station 100A and the remote terminal 200C via the relay terminal 100C will be described.

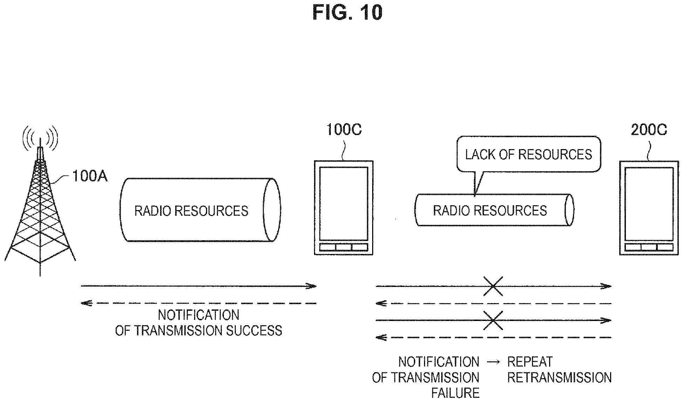

First, technical problems of the system according to the embodiment will be summarized with reference to FIG. 10. FIG. 10 is an explanatory diagram for describing an overview of a system according to the embodiment. In each relay communication between the base station 100A and the remote terminal 200C via the relay terminal 100C, data is transmitted and received between the base station 100A and the relay terminal 100C (that is, a backhaul link) and between the relay terminal 100C and the remote terminal 200C (that is, an access link). Therefore, for example, in a case in which data is transmitted from the base station 100A to the remote terminal 200C via the relay terminal 100C, transmission of the data via the access link fails in some cases even when transmission of the data via the backhaul link is successful.

In particular, the resources allocated to the access link are further limited than the resources allocated to the backhaul link in many cases. Therefore, in the communication via the access link, the resources lack more easily than in the communication via the backhaul link in some cases.

In such a situation, for example, when retransmission control is performed independently in each of the backhaul link and the access link, it is difficult for the base station 100A to recognize failure in some cases despite the failure of transmission and reception of data via the access link. Therefore, in the relay communication between the base station 100A and the remote terminal 200C via the relay terminal 100C, it is difficult to guarantee link quality of E2E in some cases.

In view of such a situation, according to the embodiment, an example of a structure of retransmission control enabling link quality of E2E to be guaranteed in the relay communication between the base station 100A and the remote terminal 200C via the relay terminal 100C will be proposed.

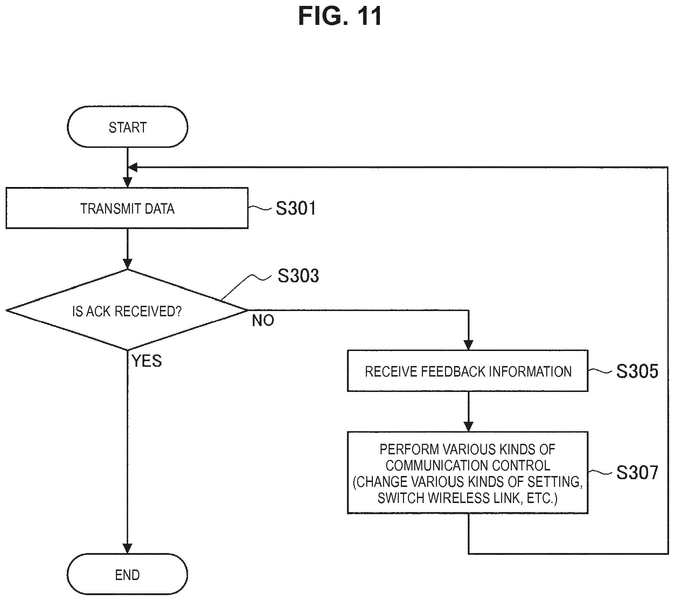

For example, FIG. 11 is a flowchart illustrating an example of a flow of a series of processes of the system according to the embodiment and illustrates an example of a process of the base station 100A related to retransmission of data at a rough level particularly in a case in which transmission and reception of data fail. Note that in the description, to facilitate understanding of features of the system according to the embodiment, a case in which the relay terminal 100C performs relay transmission of the data transmitted from the base station 100A to the remote terminal 200C (hereinafter also referred to as "DL communication") will be focused on.

For example, that the base station 100A (the communication processing unit 151) transmits data to the remote terminal 200C via the relay terminal 100C (S301) and it is assumed the remote terminal 200C fails in decoding of the data and transmits directly or indirectly AL NACK to the base station 100A. In this case, the base station 100A (the information acquisition unit 153) receives this AL NACK from the remote terminal 200C (NO in S303) and receives directly or indirectly feedback of information regarding the transmission and reception of data from the remote terminal 200C (S305).

When the feedback is received from the remote terminal 200C, the base station 100A (the communication processing unit 151) controls communication related to the transmission of the data to the remote terminal 200C on the basis of the fed-back information (S307). For example, the base station 100A may instruct at least one of the relay terminal 100C or the remote terminal 200C to change various kinds of setting related to the communication between the relay terminal 100C and the remote terminal 200C via the access link on the basis of the fed-back information. In addition, the base station 100A may control allocation of the resources to the access link. In addition, the base station 100A may instruct at least one of the relay terminal 100C or the remote terminal 200C to switch the wireless link to be used to transmit (retransmit) the data on the basis of the fed-back information.

Subsequently, a process related to retransmission of the data for which the remote terminal 200C fails in the decoding is performed (S301). At this time, the base station 100A may instruct the relay terminal 100C to retransmit the data. In addition, as another example, in a case in which the relay terminal 100C receives an instruction or the like related to a change of the setting from the base station 100A, retransmission of the data may be executed.

Subsequently, the remote terminal 200C is assumed to succeed in decoding data and directly or indirectly transmits AL NACK to the base station 100A. In this case, the base station 100A (the information acquisition unit 153) receives this AL ACK from the remote terminal 200C (YES in S303) and ends the series of processes related to the transmission of the data.

As described above, in the system according to the embodiment, the base station 100A receives the feedback of the information regarding the transmission and reception of the data from at least one of the relay terminal 100C or the remote terminal 200C in a case in which the transmission and reception of the data via at least some of the wireless links fail. Thus, the base station 100A can recognize the failure, for example, in a case in which the terminal device 200C fails in the transmission and reception of the data via the access link. Therefore, on the basis of, for example, the fed-back information, the base station 100A can also instruct at least one of the relay terminal 100C or the remote terminal 200C to change the setting via the access link, switch the wireless link to be used to transmit the data, or the like. In addition, at this time, on the basis of the fed-back information, the base station 100A can also control allocation of the resources to the access link. Note that the details of a flow of a series of processes of the relay communication between the base station 100A and the remote terminal 200C via the relay terminal 100C will be described specially later.

In the above-described configuration, the system according to the embodiment can realize the retransmission control in a more preferable aspect in the relay communication between the base station 100A and the remote terminal 200C via the relay terminal 100C and can further guarantee the link quality of E2E.

As the overview of the system according to the embodiment, the example of the structure for realizing the retransmission control based on HARQ in the relay communication between the base station 100A and the remote terminal 200C via the relay terminal 100C has been described above with reference to FIGS. 10 and 11.

### <<4.2. Technical features>>

Next, technical features of the system according to the embodiment will be described in more detail.

### (1) Process

First, an example of a flow of a series of processes of the relay communication in the system according to the embodiment, particularly, retransmission control based on HARQ, will be mainly described. Note that in the description, a case in which data is transmitted from the base station 100A to the remote terminal 200C (DL communication) and a case in which data is transmitted from the remote terminal 200C to the base station 100A (UL communication) will be described separately.

### (1-1) Process of DL communication

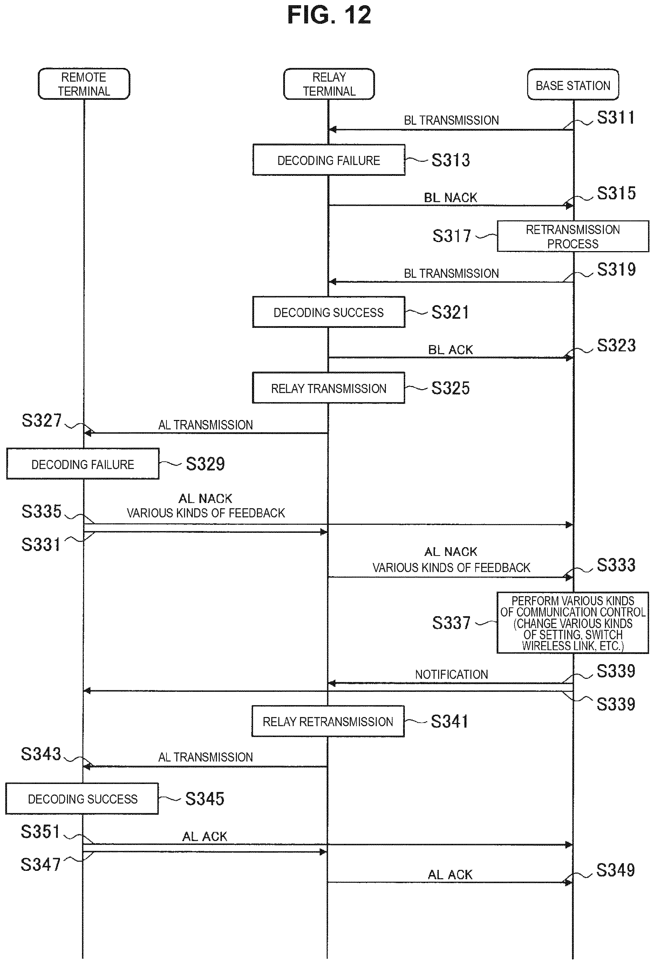

First, an example of the flow of the series of processes of the system according to the embodiment will be described focusing on the DL communication with reference to FIG. 12. FIG. 12 is a sequence diagram illustrating an example of the flow of the series of processes of the relay communication in the system according to the embodiment and illustrates an example of the retransmission control in the DL communication.

As illustrated in FIG. 12, the base station 100A (the communication processing unit 151) first transmits data to the relay terminal 100C via the backhaul link (S311) and the relay terminal 100C (the communication processing unit 151) is assumed to fail in decoding of the data (S313). In this case, the relay terminal 100C (the notification unit 157) notifies the base station 100A of BL NACK (S315).

When the base station 100A receives BL NACK from the relay terminal 100C as a transmission result of the data for the relay terminal 100C, the base station 100A performs a process of retransmitting the data (S317 and S319). Here, the relay terminal 100C is assumed to succeed in decoding the data retransmitted from the base station 100A (S321). In this case, the relay terminal 100C (the notification unit 157) notifies the base station 100A of BL ACK (S323). Thus, the base station 100A can recognize that the retransmission of the data to the relay terminal 100C via the backhaul link is successful.

Subsequently, the relay terminal 100C (the communication processing unit 151) performs relay transmission of the data received from the base station 100A to the remote terminal 200C which is a transmission designation of the data via the access link (S325 and S327). Here, the remote terminal 200C is assumed to fail in decoding of the data transmitted from the relay terminal 100C (S329). In this case, the remote terminal 200C (the notification unit 247) notifies the base station 100A and the relay terminal 100C of AL NACK and feeds information regarding the reception result of the data transmitted from the relay terminal 100C back to the base station 100A. Note that at this time, the remote terminal 200C may perform notification of AL NACK and feedback of the information for the base station 100A on the basis of indirect communication (that is, relay communication) performed via the relay terminal 100C (S331 and S333). In addition, as another example, the remote terminal 200C may perform notification of AL NACK and feedback of the information for the base station 100A on the basis of the direct communication performed via the Uu link (S335). Note that a notification method for the feedback is not particularly limited as long as the feedback of the information regarding the reception result of the data transmitted from the relay terminal 100C is associated with the notification of AL NACK from the remote terminal 200C.

When the base station 100A (the communication processing unit 151) receives the notification of AL NACK and the feedback of the information regarding the reception result of the data from the remote terminal 200C, the base station 100A performs control of direct or indirect communication with the remote terminal 200C (in other words, communication of E2E with the remote terminal 200C) (S337 and S339).

As a specific example, on the basis of the fed-back information, the base station 100A may instruct at least one of the relay terminal 100C or the remote terminal 200C to change various kinds of setting related to the communication between the relay terminal 100C and the remote terminal 200C via the access link. In addition, as another example, on the basis of the fed-back information, the base station 100A may instruct at least one of the relay terminal 100C or the remote terminal 200C to switch the wireless link to be used to transmit (retransmit) the data. As a specific example, the base station 100A may instruct at least one of the remote terminal 200C or each relay terminal 100C to hand over the relay terminal 100C used for the relay communication with the remote terminal 200C to another relay terminal 100C. In addition, the base station 100A may instruct the remote terminal 200C to switch the communication with the remote terminal 200C from the communication via the relay terminal 100C to the direct communication performed via the Uu link (fallback). In addition, the base station 100A may control the allocation of the resources to the access link.

When the control by the base station 100A is completely performed, retransmission of the data for which the remote terminal 200C fails in the decoding is controlled. In this case, for example, the relay terminal 100C (the communication processing unit 151) performs a process of retransmitting the data via the access link for the remote terminal 200C (S341 and S343). Here, the remote terminal 200C is assumed to succeed in decoding the data retransmitted from the relay terminal 100C (S345). In this case, the remote terminal 200C (the notification unit 247) notifies the base station 100A and the relay terminal 100C of AL ACK. Note that at this time, the remote terminal 200C may notify the base station 100A of AL ACK on the basis of the indirect communication (that is, the relay communication) performed via the relay terminal 100C (S347 and S349). In addition, as another example, the remote terminal 200C may notify the base station 100A of AL NACK on the basis of the direct communication performed via the Uu link (S351). Thus, the base station 100A can recognize that the relay transmission of the data from the relay terminal 100C to the remote terminal 200C via the access link is successful.

The example of the flow of the series of processes in the system according to the embodiment has been described above with reference to FIG. 12 focusing on the DL communication.

### (1-2) Process of UL communication

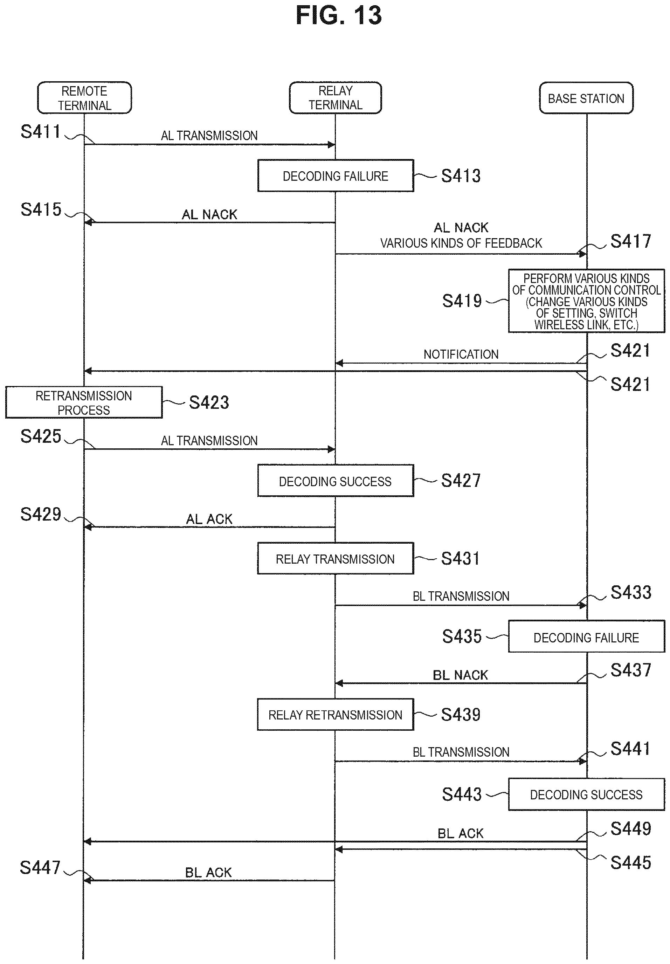

Next, an example of a flow of a series of processes of the system according to the embodiment will be described focusing on the UL communication with reference to FIG. 13. FIG. 13 is a sequence diagram illustrating another example of the flow of the series of processes of the relay communication in the system according to the embodiment and illustrates an example of the retransmission control in the UL communication.

As illustrated in FIG. 13, the remote terminal 200C (the communication processing unit 241) first transmits the data to the relay terminal 100C via the access link (S411) and the relay terminal 100C (the communication processing unit 151) is assumed to fail in decoding of the data (S413). In this case, the relay terminal 100C (the notification unit 157) notifies the remote terminal 200C of AL NACK (S415). That is, the remote terminal 200C (the information acquisition unit 243) is notified of AL NACK as a response to the transmitted data by the relay terminal 100C. In addition, the relay terminal 100C (the notification unit 157) performs notification of AL NACK from the remote terminal 200C and feedback of the information regarding the reception result of the data transmitted from the remote terminal 200C for the base station 100A (S417). Note that a notification method for the feedback is not particularly limited as long as the feedback of the information regarding the reception result of the data transmitted from the remote terminal 200C is associated with the notification of AL NACK from the remote terminal 200C.

When the base station 100A (the communication processing unit 151) receives the notification of AL NACK and the feedback of the information regarding the reception result of the data from the relay terminal 100C, the base station 100A performs control of direct or indirect communication with the corresponding remote terminal 200C (in other words, communication of E2E with the remote terminal 200C) (S419 and S421). Note that since the content of the control is similar to that of the case of the above-described DL communication, the detailed description will be omitted.

When the control by the base station 100A is completely performed, retransmission of the data for which the relay terminal 100C fails in the decoding is controlled. In this case, the remote terminal 200C (the communication processing unit 241) performs a process of retransmitting the data via the access link for the relay terminal 100C (S423 and S425). Here, the relay terminal 100C is assumed to succeed in decoding the data retransmitted from the remote terminal 200C (S427). In this case, the relay terminal 100C (the notification unit 157) notifies the remote terminal 200C of AL ACK (S429). That is, the remote terminal 200C (the information acquisition unit 243) is notified of AL ACK as a response to the retransmitted data by the relay terminal 100C. Thus, the remote terminal 200C (the determination unit 245) can recognize that the transmission of the data to the relay terminal 100C via the access link is successful.

Subsequently, the relay terminal 100C (the communication processing unit 151) performs the relay transmission of the data received from the remote terminal 200C to the base station 100A via the backhaul link (S431 and S433). Here, the base station 100A is assumed to fail in the decoding of the data transmitted from the relay terminal 100C (S435). In this case, the base station 100A (the notification unit 157) notifies the relay terminal 100C of BL NACK (S437).

When the relay terminal 100C receives BL NACK from the base station 100A as a transmission result of the data for the base station 100A, the relay terminal 100C performs a process of retransmitting the data (S439 and S441). Here, the base station 100A is assumed to succeed in decoding the data retransmitted from the relay terminal 100C (S443). In this case, the base station 100A (the notification unit 157) notifies the relay terminal 100C and the remote terminal 200C of BL ACK. Note that at this time, the base station 100A may notify the remote terminal 200C of BL ACK on the basis of indirect communication performed via the relay terminal 100C (that is, the relay communication) (S445 and S447). In addition, as another example, the base station 100A may notify the remote terminal 200C of BL ACK on the basis of the direct communication performed via the Uu link (S449). That is, the remote terminal 200C (the information acquisition unit 243) is notified of BL ACK as the reception result of the transmitted data on the basis of the direct or indirect communication from the base station 100A. Thus, the remote terminal 200C (the determination unit 245) can recognize that the relay transmission of the data from the relay terminal 100C to the base station 100A via the backhaul link is successful.

The example of the flow of the series of processes in the system according to the embodiment has been described above with reference to FIG. 13 focusing on the UL communication.

### (2) Details of feedback

Next, the details of a process related to the feedback of the information from at least one of the relay terminal 100C or the remote terminal 200C to the base station 100A when the transmission and reception of the data between the relay terminal 100C and the remote terminal 200C via the access link fail will be described.

First, as described above, in the system according to each embodiment of the present disclosure, transmission and reception results (BL ACK and BL NACK) of the data via the backhaul link and are explicitly distinguished from transmission and reception results (AL ACK and AL NACK) of the data via the access link. Note that a plurality of pieces of information of at least some of BL ACK and BL NACK transmitted and received between the relay terminal 100C and the base station 100A and AL ACK and AL NACK transmitted and received between the relay terminal 100C and each remote terminal 200C may be multiplexed and transmitted.

### (2-1) Example of fed-back information

As the information fed back from the remote terminal 200C or the relay terminal 100C to the base station 100A, for example, the number of times the transmission of the data via the access link fails, information regarding communication quality of the access link (for example, a result of an RRM measurement for the access link (side link)), and the like can be exemplified. In addition, in a case in which a resource pool is allocated to the access link, information regarding the resource pool may be fed back to the base station 100A. In this case, for example, information regarding a use situation (a situation of the degree of congestion) of resources in the resource pool may be fed back to the base station 100A. In addition, the remote terminal 200C or the relay terminal 100C may sense a use situation of resources in a predetermined resource pool or at a predetermined frequency band and feed a sensing result of the use situation of the resources back to the base station 100A.

### (2-2) Example of feedback method

As the method in which the remote terminal 200C feeds information back to the base station 100A, a method of indirectly feeding information through relay communication back via the relay terminal 100C and a method of directly feeding information back via the Uu link can be exemplified.

For example, in a case in which information is indirectly fed back through the relay communication via the relay terminal 100C, a PSCCH or a physical sidelink shared channel (PSSCH) can be used for feedback of the information via the access link between the remote terminal 200C and the relay terminal 100C. In addition, for example, a PUCCH or a PUSCH can be used for feedback of information via the backhaul link between the relay terminal 100C and the base station 100A. In addition, as another example, a PDCCH or a PDSCH may be used for feedback of information via the backhaul link between the relay terminal 100C and the base station 100A.

In addition, in a case in which information is directly fed back via the Uu link, for example, PUCCH or a PUSCH can be used for the feedback. In addition, as another example, a PDCCH or a PDSCH may be used for the feedback via the Uu link.

In addition, the feedback from the remote terminal 200C or the relay terminal 100C to the base station 100A may be performed using a determination result based on a predetermined condition as a trigger. In this case, the condition for the trigger of the feedback (for example, a threshold for determination) may be set in a semi-persistent manner from the base station 100A or a higher layer or may be set in a fixed manner, for example. In addition, the condition may be set dynamically.

In addition, as the condition for the trigger of the feedback, for example, the number of times the transmission of the data via the access link fails, information regarding communication quality of the access link (for example, a result of an RRM measurement for the access link (side link)), and the like can be exemplified. In addition, in a case in which a resource pool is allocated to the access link, information regarding the resource pool (for example, a use situation (a situation of the degree of congestion) of resources of the resource pool) may be used as the condition for the trigger of the feedback. In addition, a sensing result of the use situation of resources in a predetermined resource pool or at a predetermined frequency band may be used as the condition for the trigger of the feedback. On the basis of the above-described various kinds of information, for example, the remote terminal 200C may perform the feedback to the base station 100A or the relay terminal 100C, for example, in a case in which the various kinds of information exceed the threshold. Similarly, the relay terminal 100C may perform the feedback to the base station 100A in a case in which the above-described various kinds of information exceed the threshold.

In addition, in a case in which the relay terminal 100C determines the condition for the trigger of the feedback to the base station 100A, the number of remote terminals 200C performing the feedback to the relay terminal 100C may be used as the condition. In this case, for example, in a case in which the number of remote terminals 200C performing the feedback to the relay terminal 100C exceeds a threshold, the relay terminal 100C may perform the feedback to the base station 100A.

In addition, a period in which information used to determine whether or not to perform the feedback is collected (also referred to as a "window period") may be set. In this case, it is sufficient if the remote terminal 200C or the relay terminal 100C performs feedback of the information to the base station 100A in a case in which the condition for the trigger of the feedback is satisfied during the window period. Note that, it is sufficient if, for example, the base station 100A sets with regard to start, end, and duration of the window period in the remote terminal 200C or the relay terminal 100C. In addition, the remote terminal 200C or the relay terminal 100C may clear a counter of the information collected during the window period in a case in which the window period has passed.

### (3) Details of operation after reception of feedback

Next, an example of an operation after the base station 100A receives feedback from the remote terminal 200C or the relay terminal 100C will be described.

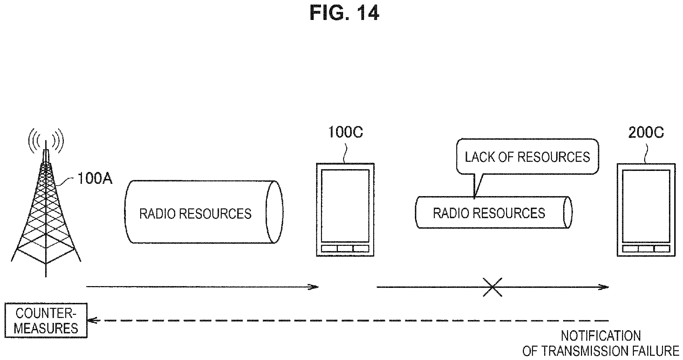

For example, FIG. 14 is an explanatory diagram for describing an aspect of an operation of the system according to the embodiment and illustrates an overview of an operation of the base station 100A receiving feedback from the remote terminal 200C. As illustrated in FIG. 14, for example, in a case in which the relay terminal 100C performs relay transmission of data transmitted from the base station 100A to the relay terminal 100C to the remote terminal 200C, it is assumed that resources of the access link lack and the relay transmission fails. In this case, as described above, the remote terminal 200C directly or indirectly notifies the base station 100A that the transmission of the data has failed. In this case, the base station 100A receives the feedback of the information regarding transmission and reception of the data via the access link from the remote terminal 200C or the relay terminal 100C and performs a countermeasure against the feedback. Accordingly, hereinafter, an example of the countermeasure against the feedback taken by the base station 100A will be described.

### (3-1) Instruction to retransmit data

In a case in which the base station 100A receives feedback from the remote terminal 200C or the relay terminal 100C, the base station 100A may instructs a transmission source of the data between the remote terminal 200C and the relay terminal 100C to retransmit data in accordance with the feedback.

### (Control of transmission mode)

Note that when data is retransmitted, a mode of communication in the retransmission of the data between the remote terminal 200C and the relay terminal 100C via the access link (that is, a transmission mode) may be controlled. As a specific example, the base station 100A may select one of Mode 1 to Mode 3 to be described below and instruct at least one of the remote terminal 200C or the relay terminal 100C to switch a mode to the selected mode on the basis of a predetermined indicator (for example, a mode indicator).

Here, each of Mode 1 to Mode 3 will be described. For example, Mode 1 is a mode in which the base station 100A schedules resource blocks to be used to transmit data via the access link and gives an instruction for the resource blocks to the remote terminal 200C or the relay terminal 100C.

In addition, Mode 2 is a mode in which the remote terminal 200C or the relay terminal 100C selects resources to be used to transmit data from the resource pool which can be used to transmit the data via the access link. Note that, in this case, the resource pool may be set by the base station 100A or may be set in advance (may be pre-configured).

In addition, Mode 3 is a mode in which the relay terminal 100C schedules resource blocks to be used to transmit data via the access link from a resource pool which can be used to transmit the data via the access link (hereinafter also referred to as a "relay resource pool") and gives an instruction for the resource blocks to the remote terminal 200C. Note that, even in this case, the relay resource pool may be set by the base station 100A or may be set in advance (may be pre-configured).

### (Control of resource pool)

In addition, when data is retransmitted, setting of a resource pool which can be used to transmit data via the access link may be controlled.

For example, the base station 100A may reset the resource pool so that the size of the resource pool increases or may additionally allocate a resource pool in a case in which resources which can be used to transmit and receive the data via the access link lack.

In addition, the base station 100A may change a resource pool set in advance as the resource pool which can be used to transmit the data via the access link to another resource pool.

In addition, the base station 100A may apply setting of frequency hopping to the use of the resource pool. In this case, the base station 100A may supply information regarding the setting of the frequency hopping to the remote terminal 200C or the relay terminal 100C.

Note that in a case in which the setting of the resource pool is changed, the base station 100A may notify the remote terminal 200C or the relay terminal 100C of information regarding the resource pool after the setting change. Note that, as an example of the information regarding the resource pool notified of at this time, for example, information regarding a frequency domain and information regarding a time domain can be exemplified. As the information regarding the frequency domain, for example, a start position of a physical resource block (PRB) (PRB start), an end position of the PRB (PRB End), the number of PRBs, sub-channel information, and the like can be exemplified. In addition, as the information regarding the time domain, for example, a bitmap indicator, a subframe number, a frame number, and the like can be exemplified. In addition, the base station 100A may notify the remote terminal 200C or the relay terminal 100C of a hopping flag of the resource pool. In addition, the base station 100A may give an instruction for a hopping pattern to the remote terminal 200C or the relay terminal 100C in accordance with a resource pool popping indicator.

### (Control of transmission parameter)

In addition, when data is retransmitted, various kinds of setting (parameters) related to transmission of data via the access link may be controlled.

As the parameters related to the transmission of the data via the access link, for example, a transport block size, a modulation scheme, allocated resource blocks, a redundancy version indicating a feature of a data block to be transferred again, and the like can be exemplified. The allocation of these parameters may be controlled directly or may be controlled by limiting a selection range of the parameters. In the case of control in which the selection range of the parameters is limited, several modes may be defined and the selection range of the parameters may be controlled by allocating a specific mode.

For example, in a case in which Mode 1 is selected as the transmission mode, the setting at the time of retransmission of the data is controlled by the base station 100A and at least one of the remote terminal 200C or the relay terminal 100C is notified of the information regarding the setting by the base station 100A. Note that the base station 100A may directly notify the remote terminal 200C of the information regarding the setting using downlink control information (DCI) or a system information block (SIB). In addition, as another example, the base station 100A may indirectly notify the remote terminal 200C of the information regarding the setting via the relay terminal 100C. In this case, it is sufficient if, for example, the notification of the information from the base station 100A to the relay terminal 100C is performed using, for example, the DCI or the SIB. In addition, it is sufficient if the notification of the information from the relay terminal 100C to the remote terminal 200C is performed using, for example, sidelink control information (SCI).

In addition, in a case in which Mode 2 is selected as the transmission mode, the setting at the time of retransmission of the data may be selected by the terminal serving as a transmission source of the data between the remote terminal 200C and the relay terminal 100C. Note that, in this case, the remote terminal 200C or the relay terminal 100C may receive an instruction for a range of the setting selected at the time of retransmission of the data from, for example, the base station 100A or a network side. Note that the instruction may be given using, for example, the DCI or the SIB.

In addition, in a case in which Mode 3 is selected as the transmission mode, the setting at the time of retransmission of the data is controlled by the relay terminal 100C and the remote terminal 200C may be notified of the information regarding the setting by the relay terminal 100C. Note that, in this case, it is sufficient if the relay terminal 100C notifies the remote terminal 200C of the information regarding the setting using the SCI.

### (3-2) Switching of wireless link

In a case in which the base station 100A receives feedback from the remote terminal 200C or the relay terminal 100C, the base station 100A may switch the wireless link to be used for communication with the remote terminal 200C in accordance with the feedback.

Specifically, the base station 100A may switch (that is, handover or reselect) the relay terminal 100C which is used for the relay communication with the remote terminal 200C to another relay terminal 100C. Note that, in this case, for example, the base station 100A may notify the relay terminal 100C serving as a switching destination of a request for the switching (that is, a handover request or a reselection request). That is, it is sufficient if the relay terminal 100C serving as the switching destination receives the request from the base station 100A and starts various processes related to the handover or the reselection.

In addition, as another example, the base station 100A may notify a candidate for the relay terminal 100C located nearby of a message for the handover request or the reselection request. Note that, in this case, it is sufficient if the base station 100A notifies the candidate for the relay terminal 100C located nearby of the message for the handover request or the reselection request using, for example, a discovery signal.

In addition, the base station 100A may notify the remote terminal 200C of a request for switching the relay terminal 100C (that is, a handover request or a reselection request). In this case, the base station 100A may directly notify, for example, the remote terminal 200C of the switching request via the Uu link. In addition, as another example, the base station 100A may indirectly notify the remote terminal 200C of the switching request via the relay terminal 100C. Note that it is sufficient if the remote terminal 200C receives the request from the base station 100A and starts various processes related to the handover or the reselection.

In addition, the base station 100A may switch the communication with the remote terminal 200C from the relay communication via the relay terminal 100C to direct communication performed via the Uu link.

### (3-3) CoMP operation

In a case in which the base station 100A receives feedback from the remote terminal 200C or the relay terminal 100C, the base station 100A may achieve an improvement in a throughput by increasing the number of relay terminals 100C using the relay communication on the basis of a technology called so-called coordinated multi-point (CoMP).

Specifically, the base station 100A newly sets the relay terminal 100C used for CoMP transmission. Then, the base station 100A transmits data to the remote terminal 200C via the plurality of relay terminals 100C by the CoMP transmission in which the plurality of relay terminals 100C including the newly set relay terminal 100C is used. At this time, the base station 100A instructs the plurality of relay terminals 100C used for the CoMP transmission to apply the CoMP transmission to the relay communication between the base station 100A and the remote terminal 200C via the relay terminal 100C. As a method for the CoMP transmission, for example, a method such as joint transmission in which the same data is simultaneously transmitted from the plurality of relay terminals 100C or dynamic relay selection in which switching of the transmission link is performed instantaneously is used.

Note that the base station 100A may instruct the plurality of relay terminals 100C used for the CoMP transmission to transmit mutually different redundancy versions (RVs). In addition, the base station 100A or the remote terminal 200C may instruct each of the plurality of relay terminals 100C used for the CoMP transmission to transmit information regarding the resources used for the CoMP transmission.

### <4.3. Evaluation>

As described above, in the information processing system according to the embodiment, the base station 100A receives the feedback of the information regarding the transmission and reception of the data via the access link in the relay communication with the remote terminal 200C via the relay terminal 100C from at least one of the remote terminal 200C or the relay terminal 100C. Then, after the base station 100A receives the feedback of the information regarding the transmission and reception of the data, the base station 100A controls direct or indirect communication with the remote terminal 200C (in other words, communication of E2E with the remote terminal 200C) corresponding to the information.

In the above-described configuration, the system according to the embodiment can realize the retransmission control in a more preferable aspect in the relay communication between the base station 100A and the remote terminal 200C via the relay terminal 100C and can further guarantee the link quality of E2E.

### «5. Third embodiment»

### <5.1. Overview>

Next, as a third embodiment, an example of a structure of retransmission control in a case in which so-called unidirectional communication is performed in the relay communication between the base station 100A and the remote terminal 200C via the relay terminal 100C will be described.

For example, mutually different wireless access schemes are used between communication from the relay terminal 100C to the remote terminal 200C via the access link and communication from the base station 100A to the remote terminal 200C via the Uu link (DL communication) in some cases. As a specific example, in access link (sidelink) communication between the remote terminal 200C and the relay terminal 100C, for example, a single carrier wireless access scheme called single carrier-frequency division multiple access (SC-FDMA) is used. In contrast, in the downlink communication of the direct communication between the remote terminal 200C and the base station 100A via the Uu link, for example, a multi-carrier wireless access scheme called an orthogonal frequency-division multiple access (OFDMA) is used. Therefore, in this case, it is necessary for the remote terminal 200C to include a receiver corresponding to each wireless scheme of the SC-FDMA and the OFDMA in order to receive data from each of the base station 100A and the relay terminal 100C.

On the other hand, a terminal device such as a so-called wearable terminal operating as the remote terminal 200C is required to achieve low power consumption. In contrast, a terminal device tends to consume more power in a case in which a receiver corresponding to each of a plurality of wireless access schemes is provided. In addition, a terminal device such as a so-called low cost terminal operating as the remote terminal 200C is required to achieve low cost. Therefore, in the remote terminal 200C, only a receiver corresponding to one of the above-described wireless access schemes can also be assumed to be provided in some cases. In view of such a situation, so-called unidirectional communication can also be assumed to be applied in the relay communication between the base station 100A and the remote terminal 200C via the relay terminal 100C in some cases.

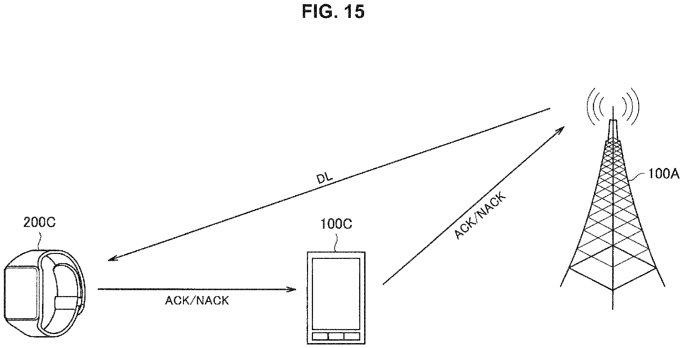

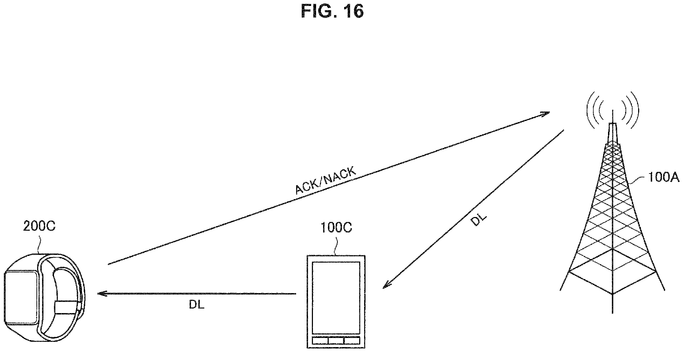

For example, FIGS. 15 and 16 are explanatory diagrams for describing an overview of a system according to the embodiment and illustrate examples of cases in which the unidirectional communication is applied to the relay communication between the base station 100A and the remote terminal 200C via the relay terminal 100C.

First, the example illustrated in FIG. 15 will be described. The example illustrated in FIG. 15 is an example of a configuration of unidirectional communication in a case in which the remote terminal 200C includes only a receiver corresponding to the OFDMA as a receiver for wireless communication. In this case, the remote terminal 200C can receive data transmitted from the base station 100A on the basis of the OFDMA scheme, but it is difficult to receive data transmitted from the relay terminal 100C on the basis of the SC-FDMA scheme. Therefore, the remote terminal 200C receives data transmitted from the base station 100A on the basis of direct communication with the base station 100A via the Uu link. In addition, the remote terminal 200C indirectly notifies the base station 100A of a reception result (ACK/NACK) of the data received from the base station 100A on the basis of the relay communication performed via the relay terminal 100C.

Next, the example illustrated in FIG. 16 will be described. The example illustrated in FIG. 16 is an example of a configuration of unidirectional communication in a case in which the remote terminal 200C includes only a receiver corresponding to the SC-FDMA as a receiver for wireless communication. In this case, the remote terminal 200C can receive data transmitted from the relay terminal 100C on the basis of the SC-FDMA scheme, but it is difficult to receive data transmitted from the base station 100A on the basis of the OFDMA scheme. Therefore, the remote terminal 200C receives data transmitted from the base station 100A on the basis of the relay communication via the relay terminal 100C. In addition, the remote terminal 200C directly notifies the base station 100A of a reception result (ACK/NACK) of the data received from the base station 100A via the relay terminal 100C on the basis of the communication with the base station 100A via the Uu link.

In the above-described configuration, even in a situation in which the remote terminal 200C includes only a receiver corresponding to a single wireless scheme as the receiver of wireless communication, it is possible to realize control of HARQ in the relay communication between the base station 100A and the remote terminal 200C via the relay terminal 100C.

On the other hand, in the relay communication based on the unidirectional communication, as illustrated in FIGS. 15 and 16, in a case in which retransmission control of data is performed on the basis of HARQ, a time is necessary until the retransmission is performed. As a result, a case in which delay occurs can be assumed.

As a specific example, a case in which the remote terminal 200C fails in decoding of data received from the base station 100A in the example illustrated in FIG. 15 will be described. In this case, a process related to retransmission of the data is performed by the base station 100A after NACK transmitted from the remote terminal 200C is received via the relay terminal 100C by the base station 100A.

In addition, as another example, a case in which the remote terminal 200C fails in decoding of data received from the base station 100A in the example illustrated in FIG. 16 will be described. In this case, the remote terminal 200C can directly notify the base station 100A of NACK. On the other hand, retransmission of the data from the base station 100A to the remote terminal 200C is performed again through the relay communication via the relay terminal 100C. That is, the relay terminal 100C receives the data retransmitted by the base station 100A and the relay terminal 100C performs relay transmission of the data to the remote terminal 200C.

In this way, in the relay communication based on the unidirectional communication, a case in which a time is necessary until reception of the retransmitted data after the remote terminal 200C notifies the base station 100A of NACK can be assumed.

In view of such a situation, according to the embodiment, an example of a structure for further reducing delay caused due to retransmission of data in a case in which particularly unidirectional communication is applied in the relay communication between the base station 100A and the remote terminal 200C via the relay terminal 100C will be proposed.

Specifically, in the system according to the embodiment, in a case in which the remote terminal 200C fails in decoding of data transmitted from the base station 100A, the relay terminal 100C performs the retransmission of the data as a substitute instead of the base station 100A. Note that the retransmission of the data performed by the relay terminal 100C as the substitute is referred to as "substitution transmission" below. In such a configuration, even when the data is not retransmitted directly or indirectly from the base station 100A to the remote terminal 200C, the data is retransmitted from the relay terminal 100C to the remote terminal 200C. Thus, it is possible to further reduce a time necessary to retransmit the data than in the case in which the data is retransmitted directly or indirectly from the base station 100A to the remote terminal 200C.

As the overview of the system according to the embodiment, the example of the structure of the retransmission control in the case in which the unidirectional communication is performed in the relay communication between the base station 100A and the remote terminal 200C via the relay terminal 100C have been described above with reference to FIGS. 15 and 16.

### <<5.2. Technical features>>

Next, technical features of the system according to the embodiment will be described in more detail.

### (1) Process

First, an example of a flow of a series of processes of the relay communication in the system according to the embodiment will be described particularly focusing on retransmission control based on HARQ. Note that in the description, a case in which the remote terminal 200C directly receives data from the base station 100A via the Uu link (see FIG. 15) and a case in which the remote terminal 200C indirectly receives data via the relay terminal 100C (see FIG. 16) will be described separately.

### (1-1) Case in which data is directly received from base station

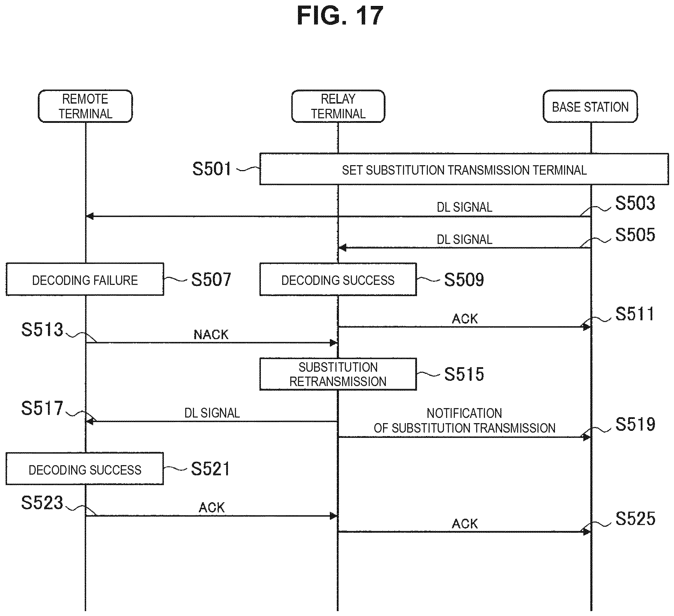

First, an example of retransmission control in a case in which the remote terminal 200C directly receives data from the base station 100A via the Uu link in the relay communication based on the unidirectional communication as illustrated in FIG. 15 will be described with reference to FIG. 17. FIG. 17 is a sequence diagram illustrating an example of a flow of a series of processes of the system according to the embodiment.

First, the base station 100A (the communication processing unit 151) sets the relay terminal 100C to be used for substitution transmission at the time of retransmission control in the relay communication with the remote terminal 200C via the relay terminal 100C (S501). Note that at this time, the base station 100A (the notification unit 157) may notify the relay terminal 100C selected for the use of the substitution transmission that the substitution transmission is used at the time of the retransmission control or may notify the relay terminal 100C of setting of the substitution transmission or the like at this time.

Subsequently, the base station 100A (the communication processing unit 151) transmits data (a DL signal) to the remote terminal 200C via the Uu link (S503). In addition, at this time, the base station 100A (the communication processing unit 151) transmits the data transmitted to the remote terminal 200C to the relay terminal 100C used for the substitution transmission at the time of the retransmission control via the backhaul link (S505). Note that it is assumed herein that the remote terminal 200C fails in decoding of data transmitted from the base station 100A (S507) and the relay terminal 100C succeeds in decoding the data transmitted from the base station 100A (S509). In a case in which the relay terminal 100C (the notification unit 157) succeeds in decoding the data (DL signal) transmitted from the base station 100A (S509), the relay terminal 100C may transmit ACK to the base station 100A (S511).

When the remote terminal 200C fails in decoding the data transmitted from the base station 100A (S507), the remote terminal 200C transmits NACK to the relay terminal 100C via the access link (S513). When the relay terminal 100C (the communication processing unit 151) receives NACK from the remote terminal 200C, the relay terminal 100C retransmits the data (DL signal) received in advance from the base station 100A to the remote terminal 200C as the substitute of the base station 100A (S515 and S517). At this time, the relay terminal 100C retransmits the data to the remote terminal 200C on the basis of a wireless access scheme (for example, OFDMA) similar to the case in which the base station 100A transmits the data to the remote terminal 200C. In addition, in a case in which the relay terminal 100C (the notification unit 157) retransmits the data to the remote terminal 200C as the substitute of the base station 100A, the relay terminal 100C notifies the base station 100A of the retransmission of the data as the substitute (S519). Thus, the base station 100A can recognize that the base station 100A may not perform a process related to the retransmission of the data to the remote terminal 200C.

Subsequently, the remote terminal 200C is assumed to succeed in decoding the data transmitted from the relay terminal 100C as the substitute of the base station 100A (S521). In this case, the remote terminal 200C (the notification unit 247) notifies the relay terminal 100C of ACK (S523). When the relay terminal 100C (the notification unit 157) is notified of ACK by the remote terminal 200C, the relay terminal 100C performs the relay transmission of the ACK that is notified of to the base station 100A (S525). Thus, the base station 100A (the determination unit 155) can recognize that the data (DL signal) transmitted to the remote terminal 200C is correctly received by the remote terminal 200C.

The example of the retransmission control in the case in which the remote terminal 200C directly receives the data from the base station 100A via the Uu link in the relay communication based on the unidirectional communication, as illustrated in FIG. 15, has been described above with reference to FIG. 17.

### (1-2) Case in which data is indirectly received via relay terminal

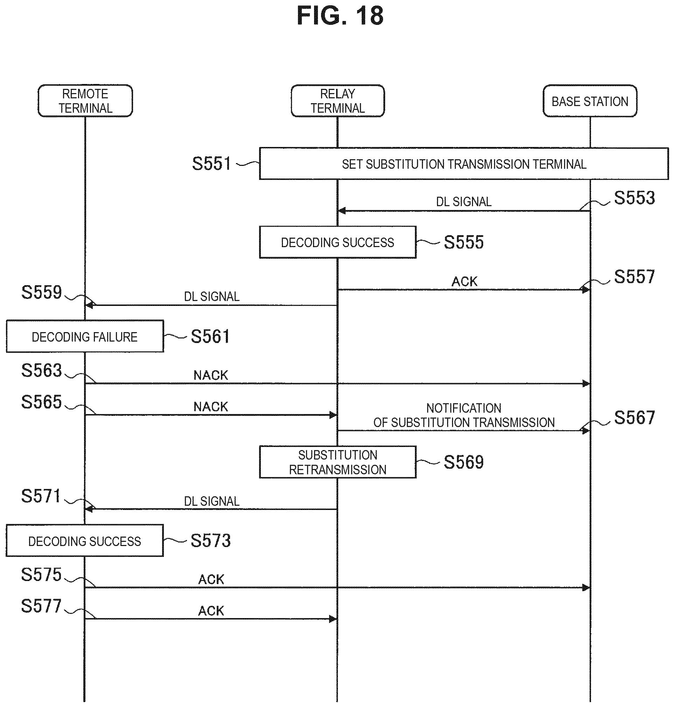

Next, an example of retransmission control in a case in which the remote terminal 200C indirectly receives data transmitted from the base station 100A via the relay terminal 100C in the relay communication based on the unidirectional communication, as illustrated in FIG. 16, will be described with reference to FIG. 18. FIG. 18 is a sequence diagram illustrating another example of the flow of the series of processes of the system according to the embodiment.

First, the base station 100A (the communication processing unit 151) sets the relay terminal 100C to be used for substitution transmission at the time of retransmission control in the relay communication with the remote terminal 200C via the relay terminal 100C (S551). Note that at this time, the base station 100A (the notification unit 157) may notify the relay terminal 100C selected for the use of the substitution transmission that the substitution transmission is used at the time of the retransmission control or may notify the relay terminal 100C of the setting of the substitution transmission or the like at this time.

Subsequently, the base station 100A (the communication processing unit 151) transmits the data (DL signal) to be transmitted to the remote terminal 200C, via the backhaul link to the relay terminal 100C to which the remote terminal 200C is connected (S553). Note that herein, the relay terminal 100C is assumed to succeed in decoding the data (S555). In this case, the relay terminal 100C (the notification unit 157) notifies the base station 100 of ACK (S557). Thus, the base station 100 (the determination unit 155) can recognize that the relay terminal 100C succeed in receiving the data on the basis of the ACK that is notified of.

Subsequently, the relay terminal 100C (the communication processing unit 151) performs the relay transmission of the data (DL signal) received from the base station 100A to the remote terminal 200C which is a transmission designation of the data via the access link (S559). Note that herein, the remote terminal 200C is assumed to fail in the decoding of the data (S661). In this case, the remote terminal 200C (the notification unit 247) notifies the base station 100A of NACK on the basis of the direct communication performed via the Uu link (S563). At this time, the relay terminal 100C decodes NACK directly transmitted from the remote terminal 200C to the base station 100A by performing blind decoding on the data transmitted from the remote terminal 200C (S565). Thus, the relay terminal 100C (the determination unit 155) can recognize that the remote terminal 200C fails in the reception of the data. Note that the base station 100A may notify the relay terminal 100C in advance of information regarding the resources of the NACK signal to be transmitted at this time.

In addition, as another example, the notification of NACK by the remote terminal 200C may be notification to the relay terminal 100C via the base station 100A. Specifically, in a case in which the base station 100A is notified of NACK by the remote terminal 200C, the base station 100A may transfer the NACK that is notified of to the relay terminal 100C instead of the retransmission of the data for which the remote terminal 200C fails in the decoding. Thus, the relay terminal 100C (the determination unit 155) can recognize that the remote terminal 200C fails in the reception of the data.

When the relay terminal 100C recognizes that the remote terminal 200C fails in the reception of the data, the relay terminal 100C performs a process related to the retransmission of the data to the remote terminal 200C. At this time, the relay terminal 100C (the notification unit 157) first notifies the base station 100A that the retransmission of the data is performed as the substitute (S567). Thus, the base station 100A can recognize that the process related to the retransmission of the data to the remote terminal 200C via the relay terminal 100C may not be performed. In addition, the relay terminal 100C (the communication processing unit 151) retransmit the data for which the remote terminal 200C fails in the reception, that is, the data (DL signal) received previously from the base station 100A, to the remote terminal 200C (S571).

Subsequently, the remote terminal 200C is assumed to succeed in decoding the data retransmitted from the relay terminal 100C (S571). In this case, the remote terminal 200C (the notification unit 247) notifies the base station 100A of ACK on the basis of the direct communication performed via the Uu link (S575). Thus, the base station 100A (the determination unit 155) can recognize that the remote terminal 200C succeeds in receiving the data. In addition, at this time, the relay terminal 100C decodes ACK transmitted directly from the remote terminal 200C to the base station 100A by performing blind decoding on the data transmitted from the remote terminal 200C (S577). Thus, the relay terminal 100C (the determination unit 155) can recognize that the remote terminal 200C succeeds in receiving the data.

The example of the retransmission control in the case in which the remote terminal 200C indirectly receives data transmitted from the base station 100A via the relay terminal 100C in the relay communication based on the unidirectional communication, as illustrated in FIG. 16, has been described above with reference to FIG. 18.

### (2) Setting of substitution transmission at time of retransmission control

Next, the details of a process related to setting of the relay terminal 100C used for substitution transmission at the time of retransmission control in the relay communication based on the unidirectional communication will be described.

For example, the base station 100A sets the relay terminal 100C to be used for the substitution transmission at the time of the retransmission control in the relay communication with the remote terminal 200C via the relay terminal 100C at a predetermined timing. At this time, as described above, the base station 100A may notify the relay terminal 100C selected for the use of the substitution transmission that the substitution transmission is used at the time of the retransmission control or may notify the relay terminal 100C of the setting of the substitution transmission or the like at this time. Note that the base station 100A may perform the notification to the relay terminal 100C using, for example, RRC signaling. In addition, the base station 100A may use, for example, a request message or a reply message for the notification to the relay terminal 100C.

In addition, the base station 100A may set the relay terminal 100C to be used for the substitution transmission at the time of the retransmission control in accordance with information regarding capability of each relay terminal 100C. Note that as the information regarding the capability of the relay terminal 100C, for example, a memory capability, battery information, a terminal category, an RF configuration, and the like of the relay terminal 100C can be exemplified. In addition, the relay terminal 100C used for the substitution transmission at the time of the retransmission control may be set by a higher layer than the base station 100A.

In addition, the timing at which the base station 100A sets the relay terminal 100C to be used for the substitution transmission at the time of the retransmission control may be set in a semi-persistent manner from a network side, or may be set in a fixed manner, for example. In addition, the timing may be set dynamically.

### (3) Decoding process in relay terminal

Next, the details of a decoding process in the relay terminal 100C will be described. Note that in the description, processes related to decoding of the data (DL signal) transmitted from the base station 100A to the remote terminal 200C and a process related to decoding of ACK and NACK transmitted from the remote terminal 200C to the base station 100A will be described separately.

### (3-1) Decoding of data (DL signal) transmitted from base station 100A

First, the details of the process related to the decoding in a case in which the relay terminal 100C decodes the data (DL signal) transmitted from the base station 100A to the remote terminal 200C as in the example described with reference to FIGS. 15 and 17 will be described.

In this case, the relay terminal 100C in which the substitution transmission is set receives and decodes the data transmitted to the remote terminal 200C via the Uu link by the base station 100A in a similar manner to that of the base station 100A. Therefore, for example, the remote terminal 200C may notify the relay terminal 100C in advance of information (for example, RNTI information) used for the decoding of the data so that the relay terminal 100C can perform decoding (for example, blind decoding) on the data transmitted from the base station 100A to the own terminal via the Uu link. In addition, as another example, the base station 100A may notify the relay terminal 100C of the information used for the decoding of the data using DCI.

In addition, the base station 100A controls the transmission of the data so that both the remote terminal 200C and the relay terminal 100C can decode the data (DL signal) transmitted to the remote terminal 200C. For example, the base station 100A may notify both the remote terminal 200C and the relay terminal 100C of a data region to be used to transmit the data using common DCI. In this case, the base station 100A may set a region to be used for the notification of the common DCI in advance.

In addition, as another example, the base station 100A may allocate mutually different pieces of DCI to the remote terminal 200C and the relay terminal 100C. In this case, it is sufficient if the base station 100A gives an instruction for the common data region (that is, the data region used to transmit the data) in accordance with the DCI allocated to each of the remote terminal 200C and the relay terminal 100C.

In addition, as still another example, the base station 100A may individually transmit the common data (DL signal) to the remote terminal 200C and the relay terminal 100C using mutually different resources. In this case, the base station 100A may individually set a data region to be used to transmit the data and the DCI for notification of the data region in each of the remote terminal 200C and the relay terminal 100C and may individually notify each of the remote terminal 200C and the relay terminal 100C of the data region and the DCI.

In addition, the base station 100A may add information regarding the remote terminal 200C which is a transmission destination of the data to the DCI allocated to the relay terminal 100C to transmit the information.

In addition, the relay terminal 100C may receive a paging signal in accordance with a paging timing of the remote terminal 200C by performing paging setting of the remote terminal 200C on the own terminal. That is, the base station 100A may set the paging timing of the remote terminal 200C in the relay terminal 100C.

### (3-2) Decoding of ACK and NACK transmitted from remote terminal 200C

Next, the details of a process related to decoding in a case in which the relay terminal 100C decodes ACK and NACK transmitted from the remote terminal 200C to the base station 100A as in the example described with reference to FIGS. 16 and 18 will be described.

In this case, the relay terminal 100C in which the substitution transmission is set performs decoding (for example, blind decoding) on ACK and NACK transmitted to the base station 100A via the Uu link by the remote terminal 200C. Therefore, for example, the base station 100A may notify the relay terminal 100C in advance of information regarding resources of ACK and NACK so that the relay terminal 100C can perform decoding (blind decoding) on ACK and NACK transmitted to the own terminal via the Uu link from the remote terminal 200C. In addition, the remote terminal 200C may notify the relay terminal 100C in advance of information (for example, RNTI information) to be used for the decoding of ACK and NACK so that the relay terminal 100C can decode ACK and NACK transmitted to the base station 100A via the Uu link. In addition, as another example, the base station 100A may notify the relay terminal 100C of information to be used for the decoding of ACK and NACK using DCI.

In addition, the relay terminal 100C may allocate a PSCCH format to the remote terminal 200C to ascertain resources of ACK and NACK used in the remote terminal 200C. In this case, it is sufficient if the relay terminal 100C ascertains the resources used for the relay terminal 100C to notify the base station 100A of ACK and NACK using the PSCCH format allocated to the remote terminal 200C and decodes ACK and NACK.

### (4) Notification of substitution transmission

Next, the details of processes of notifying the base station 100A that the data is retransmitted in a case in which the relay terminal 100C retransmits data as a substitution in the relay communication based on the unidirectional communication will be described.

In any example described with reference to FIGS. 17 and 18, the data (DL signal) transmitted to the remote terminal 200C by the base station 100A is similarly transmitted to the relay terminal 100C. In this case, the relay terminal 100C notifies the base station 100A that the relay terminal 100C retransmits the data as a substitute in accordance with a predetermined method.

As a specific example, the relay terminal 100C may notify the base station 100A that the relay terminal 100C retransmits the data as the substitute by notifying the base station 100A of ACK in a case in which decoding of the data transmitted from the base station 100A is successful. That is, in a case in which ACK is notified of as a response to the transmission of the data to the relay terminal 100C, the base station 100A can determine that the relay terminal 100C controls the above-described substitution transmission with regard to target transport blocks. Therefore, for example, in a case in which the base station 100A is notified of ACK by the relay terminal 100C, a timer for determining whether or not a response (ACK/NACK) to the data transmitted to the remote terminal 200C is returned within a given time may be stopped.

In addition, as another example, the relay terminal 100C may explicitly notify the base station 100A that the relay terminal 100C retransmits the data as a substitute. The notification is equivalent to, for example, the notification described with reference numeral S519 in the example illustrated in FIG. 17 or the notification described in reference numeral S567 in the example illustrated in FIG. 18. By performing such notification, the base station 100A can determine that the relay terminal 100C which is a notification source controls the above-described substitution transmission of the target transport blocks. Therefore, for example, in a case in which the base station 100A is notified by the relay terminal 100C that the retransmission of the data is performed by the substitute, the base station 100A may stop the timer for determining whether or not the response (ACK/NACK) to the data transmitted to the remote terminal 200C is returned within the given time.

### (5) Control in case in which it is difficult for relay terminal to perform substitution transmission

Next, an example of control in a case in which it is difficult for the relay terminal 100C to retransmit data as a substitute due to a certain reason will be described.

For example, in a case in which it is difficult to retransmit data as the substitute, the relay terminal 100C may notify the base station 100A that it is difficult to perform the substitution retransmission. At this time, in a case in which it is difficult to retransmit data corresponding to some of the transport blocks or it is difficult to retransmit data to some of the remote terminals 200C, the relay terminal 100C may notify the base station 100A of the transport blocks or information regarding the remote terminal 200C. In addition, the present disclosure is not limited to the transport blocks or the remote terminals 200C and the relay terminal 100C may notify the base station 100A that all types of substitution transmission are difficult in a case in which all types of substitution transmission are difficult.

In addition, in a case in which the base station 100A performs direct or indirect data (DL signal) transmission toward the remote terminal 200C, the base station 100A may limit a period in which a response to a reception result of the data is received by setting the timer. In such a configuration, the base station 100A may retransmit the data in a case in which the remote terminal 200C does not notify of ACK or NACK until a predetermined period elapses. Note that in this case, the base station 100A may retransmit the data until the number of retransmissions reaches a prescribed number or a prescribed delay time expires.

### <5.3. Evaluation>

As described above, in the information processing system according to the embodiment, in a case in which the remote terminal 200C fails in decoding of data transmitted from the base station 100A, the relay terminal 100C performs the retransmission of the data as a substitute instead of the base station 100A.

In such a configuration, even the data is not directly or indirectly retransmitted from the base station 100A to the remote terminal 200C, the data is retransmitted from the relay terminal 100C to the remote terminal 200C. In particular, in the communication between the relay terminal 100C and the remote terminal 200C, a transfer distance is shorter and delay is less than in the communication between the base station 100A and the remote terminal 200C or the communication between the base station 100A and the relay terminal 100C. Therefore, when the relay terminal 100C retransmits the data instead of the base station 100A, a time necessary to retransmit the data can be further reduced than in the case in which the data is directly or indirectly retransmitted from the base station 100A to the remote terminal 200C.

### «6. Application examples»

The technology according to the present disclosure can be applied to various products. For example, the base station 100 may be realized as any type of evolved Node B (eNB) such as a macro eNB or a small eNB. The small eNB may be an eNB that covers a cell, such as a pico eNB, a micro eNB, or a home (femto) eNB, smaller than a macro cell. Instead, the base station 100 may be realized as another type of base station such as a NodeB or a base transceiver station (BTS). The base station 100 may include a main entity (also referred to as a base station apparatus) that controls wireless communication and one or more remote radio heads (RRHs) disposed at different locations from the main entity. Further, various types of terminals to be described below may operate as the base station 100 by performing a base station function temporarily or permanently. Moreover, at least some of the constituent elements of the base station 100 may be realized in a base station apparatus or a module for the base station apparatus.

Further, for example, the terminal device 200 may be realized as a mobile terminal such as a smartphone, a tablet personal computer (PC), a notebook PC, a portable game terminal, a portable/dongle mobile router or a digital camera, or an in-vehicle terminal such as a car navigation device. Further, the terminal device 200 may be realized as a terminal that performs machine to machine (M2M) communication (also referred to as a machine type communication (MTC) terminal). Further, the terminal device 200 may be realized as so-called low cost terminal, such as an MTC terminal, an eMTC terminal, an NB-IoT terminal. Moreover, at least some of the constituent elements of the terminal device 200 may be realized in a module mounted on the terminal (for example, an integrated circuit module configured on one die).

### <6.1. Application examples for base station>

### (First application example)

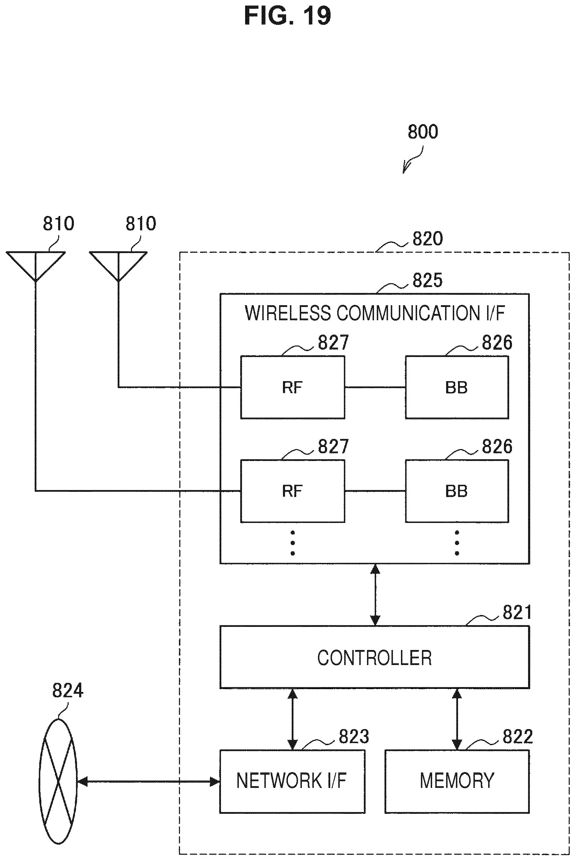

FIG. 19 is a block diagram illustrating a first example of a schematic configuration of an eNB to which the technology according to the present disclosure may be applied. An eNB 800 includes one or more antennas 810 and a base station apparatus 820. Each antenna 810 and the base station apparatus 820 may be connected to each other via an RF cable.

Each of the antennas 810 includes a single or a plurality of antenna elements (e.g., a plurality of antenna elements constituting a MIMO antenna) and is used for the base station apparatus 820 to transmit and receive a wireless signal. The eNB 800 may include the plurality of the antennas 810 as illustrated in FIG. 19, and the plurality of antennas 810 may, for example, correspond to a plurality of frequency bands used by the eNB 800. It should be noted that while FIG. 19 illustrates an example in which the eNB 800 includes the plurality of antennas 810, the eNB 800 may include the single antenna 810.

The base station apparatus 820 includes a controller 821, a memory 822, a network interface 823, and a wireless communication interface 825.

The controller 821 may be, for example, a CPU or a DSP, and operates various functions of an upper layer of the base station apparatus 820. For example, the controller 821 generates a data packet from data in a signal processed by the wireless communication interface 825, and transfers the generated packet via the network interface 823. The controller 821 may generate a bundled packet by bundling data from a plurality of base band processors to transfer the generated bundled packet. Further, the controller 821 may also have a logical function of performing control such as radio resource control, radio bearer control, mobility management, admission control, and scheduling. Further, the control may be performed in cooperation with a surrounding eNB or a core network node. The memory 822 includes a RAM and a ROM, and stores a program executed by the controller 821 and a variety of control data (such as, for example, terminal list, transmission power data, and scheduling data).

The network interface 823 is a communication interface for connecting the base station apparatus 820 to the core network 824. The controller 821 may communicate with a core network node or another eNB via the network interface 823. In this case, the eNB 800 may be connected to a core network node or another eNB through a logical interface (e.g., S1 interface or X2 interface). The network interface 823 may be a wired communication interface or a wireless communication interface for wireless backhaul link. In the case where the network interface 823 is a wireless communication interface, the network interface 823 may use a higher frequency band for wireless communication than a frequency band used by the wireless communication interface 825.

The wireless communication interface 825 supports a cellular communication system such as long term evolution (LTE) or LTE-Advanced, and provides wireless connection to a terminal located within the cell of the eNB 800 via the antenna 810. The wireless communication interface 825 may typically include a base band (BB) processor 826, an RF circuit 827, and the like. The BB processor 826 may, for example, perform encoding/decoding, modulation/demodulation, multiplexing/demultiplexing, and the like, and performs a variety of signal processing on each layer (e.g., L1, medium access control (MAC), radio link control (RLC), and packet data convergence protocol (PDCP)). The BB processor 826 may have part or all of the logical functions as described above instead of the controller 821. The BB processor 826 may be a module including a memory having a communication control program stored therein, a processor to execute the program, and a related circuit, and the function of the BB processor 826 may be changeable by updating the program. Further, the module may be a card or blade to be inserted into a slot of the base station apparatus 820, or a chip mounted on the card or the blade. Meanwhile, the RF circuit 827 may include a mixer, a filter, an amplifier, and the like, and transmits and receives a wireless signal via the antenna 810.

The wireless communication interface 825 may include a plurality of the BB processors 826 as illustrated in FIG. 19, and the plurality of BB processors 826 may, for example, correspond to a plurality of frequency bands used by the eNB 800. Further, the wireless communication interface 825 may also include a plurality of the RF circuits 827, as illustrated in FIG. 19, and the plurality of RF circuits 827 may, for example, correspond to a plurality of antenna elements. Note that FIG. 19 illustrates an example in which the wireless communication interface 825 includes the plurality of BB processors 826 and the plurality of RF circuits 827, but the wireless communication interface 825 may include the single BB processor 826 or the single RF circuit 827.

In the eNB 800 illustrated in FIG. 19, one or more constituent elements (at least any one of the communication processing unit 151, the information acquisition unit 153, the determination unit 155, or the notification unit 157) included in the processing unit 150 described with reference to FIG. 5 may be implemented in the wireless communication interface 825. Alternatively, at least some of the constituent elements may be implemented in the controller 821. As one example, a module including a part or the whole of (for example, the BB processor 826) of the wireless communication interface 825 and/or the controller 821 may be implemented on the eNB 800. The one or more constituent elements in the module may be implemented in the module. In this case, the module may store a program causing a processor to function as the one more constituent elements (in other words, a program causing the processor to execute operations of the one or more constituent elements) and execute the program. As another example, a program causing the processor to function as the one or more constituent elements may be installed in the eNB 800, and the wireless communication interface 825 (for example, the BB processor 826) and/or the controller 821 may execute the program. In this way, the eNB 800, the base station apparatus 820, or the module may be provided as a device including the one or more constituent elements and a program causing the processor to function as the one or more constituent elements may be provided. In addition, a readable recording medium on which the program is recorded may be provided.

Further, in the eNB 800 illustrated in FIG. 19, the wireless communication unit 120 described with reference to FIG. 5 may be implemented in the wireless communication interface 825 (for example, the RF circuit 827). Further, the antenna unit 110 may be implemented in the antenna 810. Further, the network communication unit 130 may be implemented in the controller 821 and/or the network interface 823. In addition, the storage unit 140 may be implemented in the memory 822.

### (Second application example)

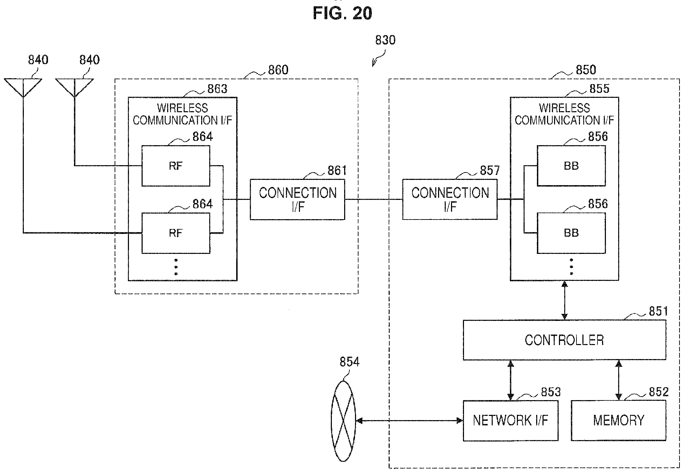

FIG. 20 is a block diagram illustrating a second example of a schematic configuration of an eNB to which the technology according to the present disclosure may be applied. An eNB 830 includes one or more antennas 840, a base station apparatus 850, and an RRH 860. Each of the antennas 840 and the RRH 860 may be connected to each other via an RF cable. Further, the base station apparatus 850 and the RRH 860 may be connected to each other by a high speed line such as optical fiber cables.

Each of the antennas 840 includes a single or a plurality of antenna elements (e.g., antenna elements constituting a MIMO antenna), and is used for the RRH 860 to transmit and receive a wireless signal. The eNB 830 may include a plurality of the antennas 840 as illustrated in FIG. 20, and the plurality of antennas 840 may, for example, correspond to a plurality of frequency bands used by the eNB 830. Note that FIG. 20 illustrates an example in which the eNB 830 includes the plurality of antennas 840, but the eNB 830 may include the single antenna 840.

The base station apparatus 850 includes a controller 851, a memory 852, a network interface 853, a wireless communication interface 855, and a connection interface 857. The controller 851, the memory 852, and the network interface 853 are similar to the controller 821, the memory 822, and the network interface 823 described with reference to FIG. 19.

The wireless communication interface 855 supports a cellular communication system such as LTE and LTE-Advanced, and provides wireless connection to a terminal located in a sector corresponding to the RRH 860 via the RRH 860 and the antenna 840. The wireless communication interface 855 may typically include a BB processor 856 or the like. The BB processor 856 is similar to the BB processor 826 described with reference to FIG. 19 except that the BB processor 856 is connected to an RF circuit 864 of the RRH 860 via the connection interface 857. The wireless communication interface 855 may include a plurality of the BB processors 856, as illustrated in FIG. 19, and the plurality of BB processors 856 may, for example, correspond to a plurality of frequency bands used by the eNB 830. Note that FIG. 20 illustrates an example in which the wireless communication interface 855 includes the plurality of BB processors 856, but the wireless communication interface 855 may include the single BB processor 856.

The connection interface 857 is an interface for connecting the base station apparatus 850 (wireless communication interface 855) to the RRH 860. The connection interface 857 may be a communication module for communication on the high speed line which connects the base station apparatus 850 (wireless communication interface 855) to the RRH 860.

Further, the RRH 860 includes a connection interface 861 and a wireless communication interface 863.

The connection interface 861 is an interface for connecting the RRH 860 (wireless communication interface 863) to the base station apparatus 850. The connection interface 861 may be a communication module for communication on the high speed line.

The wireless communication interface 863 transmits and receives a wireless signal via the antenna 840. The wireless communication interface 863 may typically include the RF circuit 864 or the like. The RF circuit 864 may include a mixer, a filter, an amplifier and the like, and transmits and receives a wireless signal via the antenna 840. The wireless communication interface 863 may include a plurality of the RF circuits 864 as illustrated in FIG. 20, and the plurality of RF circuits 864 may, for example, correspond to a plurality of antenna elements. Note that FIG. 20 illustrates an example in which the wireless communication interface 863 includes the plurality of RF circuits 864, but the wireless communication interface 863 may include the single RF circuit 864.

In the eNB 830 illustrated in FIG. 20, one or more constituent elements (at least any one of the communication processing unit 151, the information acquisition unit 153, the determination unit 155, or the notification unit 157) included in the processing unit 150 described with reference to FIG. 5 may be implemented in the wireless communication interface 855 and/or the wireless communication interface 863. Alternatively, at least some of the constituent elements may be implemented in the controller 851. As one example, a module including a part or the whole of (for example, the BB processor 856) of the wireless communication interface 855 and/or the controller 851 may be implemented on the eNB 830. The one or more constituent elements may be implemented in the module. In this case, the module may store a program causing a processor to function as the one more constituent elements (in other words, a program causing the processor to execute operations of the one or more constituent elements) and execute the program. As another example, a program causing the processor to function as the one or more constituent elements may be installed in the eNB 830, and the wireless communication interface 855 (for example, the BB processor 856) and/or the controller 851 may execute the program. In this way, the eNB 830, the base station apparatus 850, or the module may be provided as a device including the one or more constituent elements and a program causing the processor to function as the one or more constituent elements may be provided. In addition, a readable recording medium on which the program is recorded may be provided.

Further, in the eNB 830 illustrated in FIG. 13, for example, the wireless communication unit 120 described with reference to FIG. 5 may be implemented in the wireless communication interface 863 (for example, the RF circuit 864). Further, the antenna unit 110 may be implemented in the antenna 840. Further, the network communication unit 130 may be implemented in the controller 851 and/or the network interface 853. In addition, the storage unit 140 may be implemented in the memory 852.

### <6.2. Application examples for terminal device>

### (First application example)

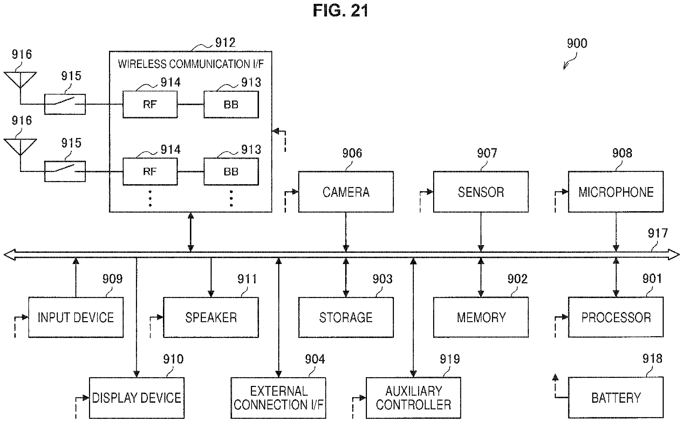

FIG. 21 is a block diagram illustrating an example of a schematic configuration of a smartphone 900 to which the technology according to the present disclosure may be applied. The smartphone 900 includes a processor 901, a memory 902, a storage 903, an external connection interface 904, a camera 906, a sensor 907, a microphone 908, an input device 909, a display device 910, a speaker 911, a wireless communication interface 912, one or more antenna switches 915, one or more antennas 916, a bus 917, a battery 918, and an auxiliary controller 919.

The processor 901 may be, for example, a CPU or a system on chip (SoC), and controls the functions of an application layer and other layers of the smartphone 900. The memory 902 includes a RAM and a ROM, and stores a program executed by the processor 901 and data. The storage 903 may include a storage medium such as semiconductor memories and hard disks. The external connection interface 904 is an interface for connecting the smartphone 900 to an externally attached device such as memory cards and universal serial bus (USB) devices.

The camera 906 includes, for example, an image sensor such as charge coupled devices (CCDs) and complementary metal oxide semiconductor (CMOS), and generates a captured image. The sensor 907 may include a sensor group including, for example, a positioning sensor, a gyro sensor, a geomagnetic sensor, an acceleration sensor and the like. The microphone 908 converts a sound that is input into the smartphone 900 to an audio signal. The input device 909 includes, for example, a touch sensor which detects that a screen of the display device 910 is touched, a key pad, a keyboard, a button, a switch or the like, and accepts an operation or an information input from a user. The display device 910 includes a screen such as liquid crystal displays (LCDs) and organic light emitting diode (OLED) displays, and displays an output image of the smartphone 900. The speaker 911 converts the audio signal that is output from the smartphone 900 to a sound.

The wireless communication interface 912 supports a cellular communication system such as LTE or LTE-Advanced, and performs wireless communication. The wireless communication interface 912 may typically include the BB processor 913, the RF circuit 914, and the like. The BB processor 913 may, for example, perform encoding/decoding, modulation/demodulation, multiplexing/demultiplexing, and the like, and performs a variety of types of signal processing for wireless communication. On the other hand, the RF circuit 914 may include a mixer, a filter, an amplifier, and the like, and transmits and receives a wireless signal via the antenna 916. The wireless communication interface 912 may be a one-chip module in which the BB processor 913 and the RF circuit 914 are integrated. The wireless communication interface 912 may include a plurality of BB processors 913 and a plurality of RF circuits 914 as illustrated in FIG. 21. Note that FIG. 21 illustrates an example in which the wireless communication interface 912 includes a plurality of BB processors 913 and a plurality of RF circuits 914, but the wireless communication interface 912 may include a single BB processor 913 or a single RF circuit 914.

Further, the wireless communication interface 912 may support other types of wireless communication system such as a short range wireless communication system, a near field communication system, and a wireless local area network (LAN) system in addition to the cellular communication system, and in this case, the wireless communication interface 912 may include the BB processor 913 and the RF circuit 914 for each wireless communication system.

Each antenna switch 915 switches a connection destination of the antenna 916 among a plurality of circuits (for example, circuits for different wireless communication systems) included in the wireless communication interface 912.

Each of the antennas 916 includes one or more antenna elements (for example, a plurality of antenna elements constituting a MIMO antenna) and is used for transmission and reception of the wireless signal by the wireless communication interface 912. The smartphone 900 may include a plurality of antennas 916 as illustrated in FIG. 21. Note that FIG. 21 illustrates an example in which the smartphone 900 includes a plurality of antennas 916, but the smartphone 900 may include a single antenna 916.

Further, the smartphone 900 may include the antenna 916 for each wireless communication system. In this case, the antenna switch 915 may be omitted from a configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919 to each other. The battery 918 supplies electric power to each block of the smartphone 900 illustrated in FIG. 21 via a feeder line that is partially illustrated in the figure as a dashed line. The auxiliary controller 919, for example, operates a minimally necessary function of the smartphone 900 in a sleep mode.

In the smartphone 900 illustrated in FIG. 21, one or more constituent elements (at least any one of the communication processing unit 241, the information acquisition unit 243, the determination unit 245, or the notification unit 247) included in the processing unit 240 described with reference to FIG. 6 may be implemented in the wireless communication interface 912. Alternatively, at least some of the constituent elements may be implemented in the processor 901 or the auxiliary controller 919. As one example, a module including a part or the whole of (for example, the BB processor 913) of the wireless communication interface 912, the processor 901, and/or the auxiliary controller 919 may be implemented on the smartphone 900. The one or more constituent elements may be implemented in the module. In this case, the module may store a program causing a processor to function as the one more constituent elements (in other words, a program causing the processor to execute operations of the one or more constituent elements) and execute the program. As another example, a program causing the processor to function as the one or more constituent elements may be installed in the smartphone 900, and the wireless communication interface 912 (for example, the BB processor 913), the processor 901, and/or the auxiliary controller 919 may execute the program. In this way, the smartphone 900 or the module may be provided as a device including the one or more constituent elements and a program causing the processor to function as the one or more constituent elements may be provided. In addition, a readable recording medium on which the program is recorded may be provided.

Further, in the smartphone 900 illustrated in FIG. 21, for example, the wireless communication unit 220 described with reference to FIG. 6 may be implemented in the wireless communication interface 912 (for example, the RF circuit 914). Further, the antenna unit 210 may be implemented in the antenna 916. In addition, the storage unit 230 may be implemented in the memory 902.

### (Second application example)

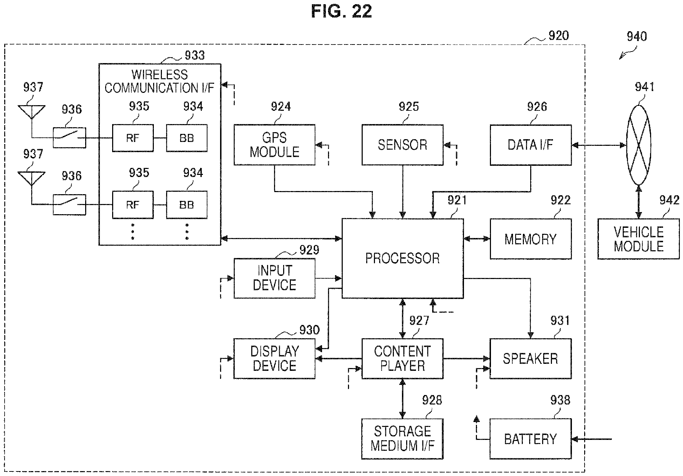

FIG. 22 is a block diagram illustrating an example of a schematic configuration of a car navigation apparatus 920 to which the technology according to the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or an SoC, and controls the navigation function and the other functions of the car navigation apparatus 920. The memory 922 includes a RAM and a ROM, and stores a program executed by the processor 921 and data.

The GPS module 924 uses a GPS signal received from a GPS satellite to measure the position (e.g., latitude, longitude, and altitude) of the car navigation apparatus 920. The sensor 925 may include a sensor group including, for example, a gyro sensor, a geomagnetic sensor, a barometric sensor and the like. The data interface 926 is, for example, connected to an in-vehicle network 941 via a terminal that is not illustrated, and acquires data such as vehicle speed data generated on the vehicle side.

The content player 927 reproduces content stored in a storage medium (e.g., CD or DVD) inserted into the storage medium interface 928. The input device 929 includes, for example, a touch sensor which detects that a screen of the display device 930 is touched, a button, a switch or the like, and accepts operation or information input from a user. The display device 930 includes a screen such as LCDs and OLED displays, and displays an image of the navigation function or the reproduced content. The speaker 931 outputs a sound of the navigation function or the reproduced content.

The wireless communication interface 933 supports a cellular communication system such as LTE or LTE-Advanced, and performs wireless communication. The wireless communication interface 933 may typically include the BB processor 934, the RF circuit 935, and the like. The BB processor 934 may, for example, perform encoding/decoding, modulation/demodulation, multiplexing/demultiplexing, and the like, and performs a variety of types of signal processing for wireless communication. On the other hand, the RF circuit 935 may include a mixer, a filter, an amplifier, and the like, and transmits and receives a wireless signal via the antenna 937. The wireless communication interface 933 may be a one-chip module in which the BB processor 934 and the RF circuit 935 are integrated. The wireless communication interface 933 may include a plurality of BB processors 934 and a plurality of RF circuits 935 as illustrated in FIG. 22. Note that FIG. 22 illustrates an example in which the wireless communication interface 933 includes a plurality of BB processors 934 and a plurality of RF circuits 935, but the wireless communication interface 933 may include a single BB processor 934 or a single RF circuit 935.

Further, the wireless communication interface 933 may support other types of wireless communication system such as a short range wireless communication system, a near field communication system, and a wireless LAN system in addition to the cellular communication system, and in this case, the wireless communication interface 933 may include the BB processor 934 and the RF circuit 935 for each wireless communication system.

Each antenna switch 936 switches a connection destination of the antenna 937 among a plurality of circuits (for example, circuits for different wireless communication systems) included in the wireless communication interface 933.

Each of the antennas 937 includes one or more antenna elements (for example, a plurality of antenna elements constituting a MIMO antenna) and is used for transmission and reception of the wireless signal by the wireless communication interface 933. The car navigation apparatus 920 may include a plurality of antennas 937 as illustrated in FIG. 22. Note that FIG. 22 illustrates an example in which the car navigation apparatus 920 includes a plurality of antennas 937, but the car navigation apparatus 920 may include a single antenna 937.

Further, the car navigation apparatus 920 may include the antenna 937 for each wireless communication system. In this case, the antenna switch 936 may be omitted from a configuration of the car navigation apparatus 920.

The battery 938 supplies electric power to each block of the car navigation apparatus 920 illustrated in FIG. 22 via a feeder line that is partially illustrated in the figure as a dashed line. Further, the battery 938 accumulates the electric power supplied from the vehicle.

In the car navigation 920 illustrated in FIG. 22, one or more constituent elements (at least any one of the communication processing unit 241, the information acquisition unit 243, the determination unit 245, or the notification unit 247) included in the processing unit 240 described with reference to FIG. 6 may be implemented in the wireless communication interface 933. Alternatively, at least some of the constituent elements may be implemented in the processor 921. As one example, a module including a part or the whole of (for example, the BB processor 934) of the wireless communication interface 933 and/or the processor 921 may be implemented on the car navigation 920. The one or more constituent elements may be implemented in the module. In this case, the module may store a program causing a processor to function as the one more constituent elements (in other words, a program causing the processor to execute operations of the one or more constituent elements) and execute the program. As another example, a program causing the processor to function as the one or more constituent elements may be installed in the car navigation 920, and the wireless communication interface 933 (for example, the BB processor 934) and/or the processor 921 may execute the program. In this way, the car navigation 920 or the module may be provided as a device including the one or more constituent elements and a program causing the processor to function as the one or more constituent elements may be provided. In addition, a readable recording medium on which the program is recorded may be provided.

Further, in the car navigation 920 illustrated in FIG. 22, for example, the wireless communication unit 220 described with reference to FIG. 6 may be implemented in the wireless communication interface 933 (for example, the RF circuit 935). Further, the antenna unit 210 may be implemented in the antenna 937. In addition, the storage unit 230 may be implemented in the memory 922.

The technology of the present disclosure may also be realized as an in-vehicle system (or a vehicle) 940 including one or more blocks of the car navigation apparatus 920, the in-vehicle network 941, and a vehicle module 942. That is, the in-vehicle system (or a vehicle) 940 may be provided as a device that includes at least one of the communication processing unit 241, the information acquisition unit 243, the determination unit 245, or the notification unit 247. The vehicle module 942 generates vehicle data such as vehicle speed, engine speed, and trouble information, and outputs the generated data to the in-vehicle network 941.

### «7. Conclusion»

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) A communication device including:
   a communication unit configured to perform wireless communication; and
   a communication processing unit configured to acquire information regarding a remote terminal connected to a relay terminal configured to be movable via a first wireless link and allocate a resource for acquiring a reception result of data from the relay terminal via a second wireless link with the relay terminal to the second wireless link on the basis of the acquired information regarding the remote terminal.
(2) The communication device according to (1), in which the communication processing unit schedules communication with the relay terminal via the second wireless link and allocates the resource on the basis of a scheduling result.
(3) The communication device according to (2), in which the communication processing unit sets a format used for the relay terminal to issue a notification of a reception result of the data on the basis of the acquired information regarding the remote terminal and allocates the resource on the basis of the set format.
(4) The communication device according to (3), in which the relay terminal is notified of the set format on the basis of predetermined signaling.
(5) The communication device according to (1), in which the communication processing unit allocates the resource by allocating a resource pool to the second wireless link.
(6) The communication device according to (5), in which the communication processing unit specifies the resource selected from the resource pool in order for the relay terminal to issue a notification of the reception result of the data on the basis of a common condition set with the relay terminal.
(7) The communication device according to (6), in which the common condition is set on the basis of information regarding at least one of identification information set in the remote terminal, positional information regarding the remote terminal, the number of retransmissions of the data, priority set in a packet with which the data is transmitted, or priority set in the remote terminal.
(8) The communication device according to any one of (1) to (7), in which the information regarding the remote terminal includes information regarding at least one of the number of the remote terminals connected to the relay terminal, a traffic amount of communication via the first wireless link, the number of transport blocks allocated to the first wireless link, communication quality necessary for the communication via the first wireless link, identification information set in the remote terminal, priority set in the remote terminal, or a data state stored in a buffer of the remote terminal.
(9) A communication device including:
   a communication unit configured to perform wireless communication; and
   a notification unit configured to notify a base station connected via a second wireless link of information regarding a remote terminal connected via a first wireless link and notify the base station of a reception result of data using a resource allocated to the second wireless link after the notification.
(10) The communication device according to (9), in which the notification unit multiplexes the reception results of the data transmitted from a plurality of remote terminals and notifies the base station of the multiplexed reception results.
(11) A communication device including:
   a communication unit configured to perform wireless communication; and
   a communication processing unit configured to acquire information regarding transmission and reception of data via a wireless link between a remote terminal and a relay terminal configured to be movable from at least one of the remote terminal or the relay terminal and control direct or indirect communication with the remote terminal corresponding to the information after the information regarding the transmission and reception of the data is acquired.
(12) The communication device according to (11), in which the information regarding the transmission and reception of the data includes information regarding at least one of a use situation of a resource pool allocated to the wireless link, communication quality of the wireless link, or the number of times the transmission of the data fails.
(13) The communication device according to (11) or (12), in which, after the information regarding the transmission and reception of the data is acquired, the communication processing unit controls setting of communication between the remote terminal and the relay terminal via the wireless link corresponding to the information.
(14) The communication device according to any one of (11) to (13), in which, after the information regarding the transmission and reception of the data is acquired, the communication processing unit controls a mode of communication with the remote terminal via the relay terminal.
(15) The communication device according to any one of (11) to (14), in which, after the information regarding the transmission and reception of the data is acquired, the communication processing unit instructs the relay terminal to retransmit the data to the remote terminal corresponding to the information.
(16) The communication device according to any one of (11) to (15), in which, after the information regarding the transmission and reception of the data is acquired, the communication processing unit controls setting of a resource allocated to the wireless link.
(17) The communication device according to (11) or (12), in which, after the information regarding the transmission and reception of the data is acquired, the communication processing unit switches the wireless link used for communication with the remote terminal corresponding to the information.
(18) A communication device including:
   a communication unit configured to perform wireless communication; and
   a notification unit configured to directly or indirectly notify a base station of information regarding transmission and reception of data via a wireless link between a remote terminal and a relay terminal configured to be movable.
(19) The communication device according to (18), in which the notification unit notifies the base station of the information regarding the transmission and reception of the data in association with a reception result of the data.
(20) The communication device according to (18) or (19),
   in which the communication device is the relay terminal, and
   the notification unit notifies the base station of the information regarding the transmission and reception of the data via a wireless link with the base station.
(21) The communication device according to (20),
   in which a notification of the information regarding the transmission and reception of the data is issued by the remote terminal, and
   the notification unit notifies the base station of the information regarding the transmission and reception of the data in accordance with the number of the remote terminals issuing notifications of the information regarding the transmission and reception of the data.
(22) The communication device according to (18) or (19),
   in which the communication device is the remote terminal, and
   the notification unit notifies the base station of the information regarding the transmission and reception of the data on the basis of at least one of communication with the base station via a direct wireless link or communication with the base station via the relay terminal.
(23) The communication device according to any one of (18) to (22), in which the notification unit notifies the base station of information regarding a reception result of the data on the basis of information regarding the wireless link.
(24) The communication device according to (23), in which the information regarding the wireless link includes information regarding at least one of a use situation of a resource pool allocated to the wireless link, communication quality of the wireless link, or the number of times the transmission of the data fails.
(25) The communication device according to any one of (18) to (24), in which the notification unit notifies the base station of the information regarding the transmission and reception of the data on the basis of information acquired during a preset period.
(26) A communication method including, by a computer:
   performing wireless communication; and
   acquiring information regarding a remote terminal connected to a relay terminal configured to be movable via a first wireless link and allocating a resource for acquiring a reception result of data from the relay terminal via a second wireless link with the relay terminal to the second wireless link on the basis of the acquired information regarding the remote terminal.
(27) A communication method including, by a computer:
   performing wireless communication; and
   notifying a base station connected via a second wireless link of information regarding a remote terminal connected via a first wireless link and notifying the base station of a reception result of data using a resource allocated to the second wireless link after the notification.
(28) A communication method including, by a computer:
   performing wireless communication; and
   acquiring information regarding transmission and reception of data via a wireless link between a remote terminal and a relay terminal configured to be movable from at least one of the remote terminal or the relay terminal and controlling direct or indirect communication with the remote terminal corresponding to the information after the information regarding the transmission and reception of the data is acquired.
(29) A communication method including, by a computer:
   performing wireless communication; and
   directly or indirectly notifying a base station of information regarding transmission and reception of data via a wireless link between a remote terminal and a relay terminal configured to be movable.

### Reference Signs List

- 1: system
- 100, 100A: base station
- 100C: relay terminal
- 110: antenna unit
- 120: wireless communication unit
- 130: network communication unit
- 140: storage unit
- 150: processing unit
- 151: communication processing unit
- 153: information acquisition unit
- 155: determination unit
- 157: notification unit
- 200: terminal device
- 200C: remote terminal
- 210: antenna unit
- 220: wireless communication unit
- 230: storage unit
- 240: processing unit
- 241: communication processing unit
- 243: information acquisition unit
- 245: determination unit
- 247: notification unit

## Claims

1. A communication device comprising:
a communication unit configured to perform wireless communication; and
a communication processing unit configured to acquire information regarding a remote terminal connected to a relay terminal configured to be movable via a first wireless link and allocate a resource for acquiring a reception result of data from the relay terminal via a second wireless link with the relay terminal to the second wireless link on a basis of the acquired information regarding the remote terminal.

2. The communication device according to claim 1, wherein the communication processing unit schedules communication with the relay terminal via the second wireless link and allocates the resource on a basis of a scheduling result.

3. The communication device according to claim 2, wherein the communication processing unit sets a format used for the relay terminal to issue a notification of a reception result of the data on the basis of the acquired information regarding the remote terminal and allocates the resource on a basis of the set format.

4. The communication device according to claim 3, wherein the relay terminal is notified of the set format on a basis of predetermined signaling.

5. The communication device according to claim 1, wherein the communication processing unit allocates the resource by allocating a resource pool to the second wireless link.

6. The communication device according to claim 5, wherein the communication processing unit specifies the resource selected from the resource pool in order for the relay terminal to issue a notification of the reception result of the data on a basis of a common condition set with the relay terminal.

7. The communication device according to claim 6, wherein the common condition is set on a basis of information regarding at least one of identification information set in the remote terminal, positional information regarding the remote terminal, a number of retransmissions of the data, priority set in a packet with which the data is transmitted, or priority set in the remote terminal.

8. The communication device according to claim 1, wherein the information regarding the remote terminal includes information regarding at least one of a number of the remote terminals connected to the relay terminal, a traffic amount of communication via the first wireless link, a number of transport blocks allocated to the first wireless link, communication quality necessary for the communication via the first wireless link, identification information set in the remote terminal, priority set in the remote terminal, or a data state stored in a buffer of the remote terminal.

9. A communication device comprising:
a communication unit configured to perform wireless communication; and
a notification unit configured to notify a base station connected via a second wireless link of information regarding a remote terminal connected via a first wireless link and notify the base station of a reception result of data using a resource allocated to the second wireless link after the notification.

10. The communication device according to claim 9, wherein the notification unit multiplexes the reception results of the data transmitted from a plurality of remote terminals and notifies the base station of the multiplexed reception results.

11. A communication device comprising:
a communication unit configured to perform wireless communication; and
a communication processing unit configured to acquire information regarding transmission and reception of data via a wireless link between a remote terminal and a relay terminal configured to be movable from at least one of the remote terminal or the relay terminal and control direct or indirect communication with the remote terminal corresponding to the information after the information regarding the transmission and reception of the data is acquired.

12. The communication device according to claim 11, wherein the information regarding the transmission and reception of the data includes information regarding at least one of a use situation of a resource pool allocated to the wireless link, communication quality of the wireless link, or a number of times the transmission of the data fails.

13. The communication device according to claim 11, wherein, after the information regarding the transmission and reception of the data is acquired, the communication processing unit controls setting of communication between the remote terminal and the relay terminal via the wireless link corresponding to the information.

14. The communication device according to claim 11, wherein, after the information regarding the transmission and reception of the data is acquired, the communication processing unit controls a mode of communication with the remote terminal via the relay terminal.

15. The communication device according to claim 11, wherein, after the information regarding the transmission and reception of the data is acquired, the communication processing unit instructs the relay terminal to retransmit the data to the remote terminal corresponding to the information.

16. The communication device according to claim 11, wherein, after the information regarding the transmission and reception of the data is acquired, the communication processing unit controls setting of a resource allocated to the wireless link.

17. The communication device according to claim 11, wherein, after the information regarding the transmission and reception of the data is acquired, the communication processing unit switches the wireless link used for communication with the remote terminal corresponding to the information.

18. A communication device comprising:
a communication unit configured to perform wireless communication; and
a notification unit configured to directly or indirectly notify a base station of information regarding transmission and reception of data via a wireless link between a remote terminal and a relay terminal configured to be movable.

19. The communication device according to claim 18, wherein the notification unit notifies the base station of the information regarding the transmission and reception of the data in association with a reception result of the data.

20. The communication device according to claim 18,
wherein the communication device is the relay terminal, and
the notification unit notifies the base station of the information regarding the transmission and reception of the data via a wireless link with the base station.

21. The communication device according to claim 20,
wherein a notification of the information regarding the transmission and reception of the data is issued by the remote terminal, and
the notification unit notifies the base station of the information regarding the transmission and reception of the data in accordance with a number of the remote terminals issuing notifications of the information regarding the transmission and reception of the data.

22. The communication device according to claim 18,
wherein the communication device is the remote terminal, and
the notification unit notifies the base station of the information regarding the transmission and reception of the data on a basis of at least one of communication with the base station via a direct wireless link or communication with the base station via the relay terminal.

23. The communication device according to claim 18, wherein the notification unit notifies the base station of information regarding a reception result of the data on a basis of information regarding the wireless link.

24. The communication device according to claim 23, wherein the information regarding the wireless link includes information regarding at least one of a use situation of a resource pool allocated to the wireless link, communication quality of the wireless link, or a number of times the transmission of the data fails.

25. The communication device according to claim 18, wherein the notification unit notifies the base station of the information regarding the transmission and reception of the data on a basis of information acquired during a preset period.

26. A communication method comprising, by a computer:
performing wireless communication; and
acquiring information regarding a remote terminal connected to a relay terminal configured to be movable via a first wireless link and allocating a resource for acquiring a reception result of data from the relay terminal via a second wireless link with the relay terminal to the second wireless link on a basis of the acquired information regarding the remote terminal.

27. A communication method comprising, by a computer:
performing wireless communication; and
notifying a base station connected via a second wireless link of information regarding a remote terminal connected via a first wireless link and notifying the base station of a reception result of data using a resource allocated to the second wireless link after the notification.

28. A communication method comprising, by a computer:
performing wireless communication; and
acquiring information regarding transmission and reception of data via a wireless link between a remote terminal and a relay terminal configured to be movable from at least one of the remote terminal or the relay terminal and controlling direct or indirect communication with the remote terminal corresponding to the information after the information regarding the transmission and reception of the data is acquired.

29. A communication method comprising, by a computer:
performing wireless communication; and
directly or indirectly notifying a base station of information regarding transmission and reception of data via a wireless link between a remote terminal and a relay terminal configured to be movable.
